(19) Europäisches Patentamt
European Patent Office
Office européen des brevets

(11) **EP 3 502 072 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **18213593.9**

(22) Anmeldetag: **18.12.2018**

(51) Int Cl.:
*C03C 3/097* *(2006.01)*    *C03C 3/087* *(2006.01)*
*C03C 1/00* *(2006.01)*    *C03C 10/00* *(2006.01)*
*C03C 4/10* *(2006.01)*

(54) **EINGEFÄRBTE KAMINSICHTSCHEIBE MIT FARBNEUTRALER TRANSMISSIONSCHARAKTERISTIK**

COLOURED FIREPLACE PANEL WITH COLOUR-NEUTRAL TRANSMISSION CHARACTERISTICS

VERRE DE VUE DE CHEMINÉE COLORÉ À CARACTÉRISTIQUE DE TRANSMISSION NEUTRE EN COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017 DE 102017131051**
**07.05.2018 DE 202018102534 U**
**11.05.2018 DE 102018111330**

(43) Veröffentlichungstag der Anmeldung:
**26.06.2019 Patentblatt 2019/26**

(73) Patentinhaber: **Schott AG**
**55122 Mainz (DE)**

(72) Erfinder:
• **WÖLFINGER, Matthias**
**65830 Kriftel (DE)**

• **GABEL, Dr. Falk**
**65388 Schlangenbad (DE)**
• **SIEBERS, Dr. Friedrich**
**55283 Nierstein (DE)**
• **WEISS, Evelin**
**55131 Mainz (DE)**
• **BOCKMEYER, Dr. Matthias**
**55116 Mainz (DE)**
• **HOCHREIN, Dr. Oliver**
**55130 Mainz (DE)**

(56) Entgegenhaltungen:
**DE-A1- 3 927 174    US-A- 4 285 728**
**US-A1- 2008 207 424    US-A1- 2016 168 018**

**Beschreibung**

Die Erfindung betrifft eine Sichtscheibe aus eingefärbter, transparenter Glaskeramik für einen Kamin mit farbneutraler Transmissionscharakteristik gemäß dem Oberbegriff des Anspruchs 1.

Es ist bekannt, dass sich Gläser aus dem Lithiumaluminiumsilikat-System $Li_2O$-$Al_2O_3$-$SiO_2$ (LAS) in Glaskeramiken mit Hochquarz-Mischkristallen und/oder Keatit-Mischkristallen als Hauptkristallphasen umwandeln lassen. Für den ersten Typ von Glaskeramiken finden sich in der Literatur auch die Synonyme "β— Quarz" oder "β—Eukryptit" und für den zweiten Typ "β—Spodumen" als Bezeichnung für die Kristallphasen. Ein bevorzugtes Anwendungsgebiet für LAS-Glaskeramiken ist ihre Verwendung als Kaminsichtscheiben.

Eine Schlüsseleigenschaft dieser Glaskeramiken ist, dass sie in einem Temperaturbereich von Raumtemperatur bis etwa 700°C über einen äußerst niedrigen thermischen Ausdehnungskoeffizienten $\alpha_{20/700}$ von üblicherweise unter $1{,}5 \cdot 10^{-6}$/K verfügen. Glaskeramiken mit Hochquarz-Mischkristallen als Hauptkristallphase verfügen über niedrigere Ausdehnungskoeffizienten im Bereich ihrer Anwendungstemperaturen beispielsweise als Kochfläche meist um $0 \pm 0{,}3 \cdot 10^{-6}$/K, während die Glaskeramiken mit Keatit-Mischkristallen als Hauptkristallphase bei Werten um $0{,}8 \cdot 10^{-6}$/K bis $1{,}5 \cdot 10^{-6}$/K liegen. Auch in ihren mittleren Kristallitgrößen unterscheiden sich die beiden Glaskeramiktypen. Glaskeramiken mit Hochquarz-Mischkristallen sind aufgrund ihrer niedrigeren Kristallitgröße von üblicherweise unter 50 nm transparent oder transparent eingefärbt herstellbar. Bildet der Keatit die Hauptphase, so liegen üblicherweise die mittleren Kristallitgrößen über 100 nm und sind wegen der resultierenden Lichtstreuung transluzent bis opak. Es gibt jedoch auch transparente Keatitphasen, z.B. beschrieben in DE 10 2014 226 986 A1 oder FR 3 002 532 A1.

Aufgrund der niedrigen thermischen Ausdehnung bei ihren Anwendungstemperaturen besitzen LAS-Glaskeramiken eine ausgezeichnete Temperaturunterschiedsfestigkeit und Temperaturwechselbeständigkeit sowie Dimensionskonstanz. Deswegen sind solche Glaskeramiken allgemein besonders gut zur Verwendung als Sichtscheiben für Kamine geeignet.

Die großtechnische Herstellung von LAS-Glaskeramiken ist dem Fachmann bekannt. Bei ihr wird zunächst das kristallisierbare Ausgangsglas aus einem Gemisch aus Scherben und pulverförmigen Gemengerohstoffen bei Temperaturen üblicherweise zwischen 1550 °C und 1700 °C geschmolzen und geläutert. Als Läutermittel werden meist Arsen- und/oder Antimonoxid oder insbesondere für umweltfreundliche Läuterung Zinnoxid eingesetzt. Zur Verbesserung der Blasenqualität kann auch eine Hochtemperaturläuterung oberhalb 1700 °C eingesetzt werden. Nach dem Einschmelzen und Läutern erfährt das Glas üblicherweise eine Heißformgebung durch Gießen, Pressen oder durch Walzen oder Floaten um Platten herzustellen.

In einem anschließenden Temperaturprozess wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 °C und 800 °C Keime, üblicherweise aus $ZrO_2$/$TiO_2$-Mischkristallen, erzeugt werden. Bei anschließender Temperaturerhöhung wachsen bei der Kristallisationstemperatur von 800 °C bis 950 °C die Hochquarz-Mischkristalle auf diesen Keimen auf.

Bei der maximalen Herstelltemperatur wird das Gefüge der Glaskeramik homogenisiert, hierbei werden die optischen, physikalischen und chemischen Eigenschaften eingestellt.

Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 950 °C bis 1250 °C. Mit der Umwandlung erhöht sich der thermische Ausdehnungskoeffizient der Glaskeramik, und im Allgemeinen tritt durch weiteres Kristallwachstum Lichtstreuung verbunden mit transluzentem bis opakem Aussehen auf. Bei der Umwandlung erhöht sich die Kristallinität und die Glaskeramiken werden fester.

Aus der DE 102017101114 A1 ist jedoch auch ein Verfahren zur Herstellung von Glaskeramik mit Keatit-Mischkristallen als Hauptphase im Kern der Glaskeramik und gleichzeitig niedriger Streuung von Licht im sichtbaren Spektralbereich bekannt. Die mittels dieses Verfahrens hergestellte Glaskeramik weist gleichzeitig eine hohe mechanische Festigkeit auf.

Durch Zusatz von Farboxiden wie $V_2O_5$, CoO, NiO, $Fe_2O_3$, $Cr_2O_3$, $CeO_2$ einzeln oder in Kombination können die Glaskeramiken eingefärbt werden, um zum Beispiel dunkle Platten oder Scheiben mit bestimmtem Transmissionsverlauf herzustellen. Dies wird beispielsweise in der DE 202018100558 U1 beschrieben. Lithiumaluminiumsilikat-Glaskeramiken können also anhand der unterschiedlichen optischen Eigenschaften in drei Kategorien aufgeteilt werden. Es wird zwischen (1) transparenten, nicht eingefärbten, (2) transparenten, eingefärbten und (3) transluzenten Glaskeramiken unterschieden.

"Transparent" bedeutet in diesem Zusammenhang, dass die Glaskeramiken nur eine geringe Streuung für sichtbares Licht aufweisen. Insbesondere weisen sie einen Haze von weniger als 20 % auf. Die geringe Lichtstreuung wird unter anderem über eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich von 20 nm bis 50 nm. Eine hohe Keimdichte setzt ausreichende Gehalte an Keimbildnern sowie ausreichende Keimbildungszeiten während der Keramisierung voraus.

"Transluzent" bedeutet in diesem Zusammenhang, dass die Glaskeramiken eine starke Streuung für sichtbares Licht aufweisen. Insbesondere weisen sie einen Haze von 20 % oder mehr auf. Gemäß dieser Definition zählen die opaken Glaskeramiken ebenfalls zur Klasse der transluzenten Glaskeramiken.

"Nicht eingefärbt" bedeutet in diesem Zusammenhang, dass die Glaskeramiken einen Lichttransmissionsgrad von mehr als 80 % aufweisen.

"Eingefärbt" bedeutet in diesem Zusammenhang, dass die Glaskeramiken einen Lichttransmissionsgrad von 80 % oder weniger aufweisen.

Bei den transparenten, nicht eingefärbten Glaskeramiken ist ein hoher Lichttransmissionsgrad, eine niedrige Streuung und eine sehr geringe Eigenfarbe gewünscht. Aufgrund dieser Eigenschaften gewährleisten sie als Kaminsichtscheiben eine besonders gute Sichtbarkeit des brennenden Feuers.

Das Einstellen einer niedrigen Eigenfarbe ist bei Glaskeramiken mit hoher Transmission sehr aufwändig. In jedem Fall müssen dafür sehr reine Rohstoffe verwendet werden. Insbesondere eisenhaltige Verunreinigungen müssen dabei vermieden werden. Darüber hinaus kann es erforderlich sein, gezielt bestimmte färbende Komponenten zuzugeben, um die Färbung durch Verunreinigungen auszugleichen. Diese Technik wird auch als Überfärben bezeichnet. Durch das Überfärben wird zwar zugunsten der Farbneutralität die Gesamttransmission leicht reduziert, sie liegt aber trotzdem über 80%. Die Verwendung besonders reiner Rohstoffe und zusätzlicher färbender Komponenten ist aus wirtschaftlichen Gründen nachteilig.

Beispielsweise aus der DE 2705948 A1 ist ein Verfahren zur Überfärbung mittels $Nd_2O_3$ bekannt. In den dort beschriebenen spezifischen Zusammensetzungen kompensiert das $Nd_2O_3$ die Absorption eines Fe/Ti-Farbkomplexes. $Nd_2O_3$ ist eine besonders teure und somit wirtschaftlich besonders nachteilige färbende Komponente. Deshalb ist es zwar geeignet, um in geringen Mengen zur Überfärbung verwendet zu werden, aber nicht, um in größeren Mengen als Hauptfärbemittel verwendet zu werden.

Die transparenten, eingefärbten Glaskeramiken unterscheiden sich von den transparenten, nicht eingefärbten Glaskeramiken dadurch, dass die Transmission über die gezielte Zugabe einer oder mehrerer färbenden Verbindungen erniedrigt ist. Der resultierende spektrale Verlauf der Transmissionskurve für eine definierte Dicke bedingt die Farbe der Glaskeramik und deren Helligkeit.

Bei den transluzenten Glaskeramiken kann je nach Bedingungen bei der Herstellung die Streuung von sichtbarem Licht unterschiedlich stark eingestellt werden. Die transluzenten Glaskeramiken können ebenfalls durch Zugabe von färbenden Verbindungen gefärbt werden. Da die Lichtstreuung einen negativen Einfluss auf die Konturenschärfe des Flammbildes hat, werden transluzente Glaskeramiken nicht für Kaminsichtscheiben verwendet.

Aus der DE 202018100558 U1 sind transparente, eingefärbte Glaskeramiken mit einem Lichttransmissionsgrad von 2,5 bis 10 % zur Verwendung als Kaminsichtscheiben bekannt. Mit einem solchen Lichttransmissionsgrad erzielt man den Effekt, dass man zwar bei Betrieb des Kamins die Flamme sehen kann, dass aber bei erloschenem Feuer der Raum hinter der Scheibe im Dunkeln bleibt und dadurch z. B. die wenig attraktive innere Struktur des Ofens bzw. Kamins unsichtbar ist. Dieser Effekt wird als "Deadfront-Effekt" bezeichnet. Die dort beschriebenen Glaskeramiken sind mittels $V_2O_5$ und $Fe_2O_3$ eingefärbt. Eine typische Eigenschaft von $V_2O_5$ als Färbemittel ist, dass es im roten Spektralbereich eine deutlich höhere Transmission aufweist, als im grünen oder blauen Spektralbereich. Ein Nachteil bei der Verwendung einer solchen Glaskeramik als Kaminsichtscheibe ist, dass die Farbe der Flamme verändert wird. Betrachtet man eine Flamme durch eine solche Glaskeramik, so wirkt sie unnatürlich rot.

Aus der DE 102007036407 A1 sind Kaminsichtscheiben bekannt, die eine teiltransparente, reflektierende Beschichtung aufweisen. Damit lässt sich bei geeigneter Wahl der Lichtdurchlässigkeit der Beschichtung ebenfalls ein Deadfront-Effekt erzielen. Vorteilhaft an dieser Lösung ist, dass eine reflektierende Beschichtung in der Regel den Farbort der Flamme in Transmission nicht verändert. Nachteilig ist jedoch, dass eine Beschichtung zumindest einen zusätzlichen Verfahrensschritt in der Herstellung darstellt. Somit ist eine beschichtete Kaminsichtscheibe gegenüber einer unbeschichteten Scheibe wirtschaftlich nachteilig.

Ein weiterer Nachteil reflektierender Beschichtungen ist, dass die Sichtbarkeit der Flamme bei gegebener Reflektivität der Beschichtung von der Beleuchtungssituation im Außenbereich des Kamins abhängig ist. Die Lichtintensität, die von der Flamme erzeugt wird und durch die teiltransparente Beschichtung tritt ist bauartbedingt festgelegt. Wird ein solcher Kamin in einer hellen Umgebung betrieben, kann das in der Kaminsichtscheibe reflektierte Umgebungslicht heller sein, als das transmittierte Licht der Flamme. Dann kann die Flamme aber nur noch schlecht, unter Umständen sogar gar nicht mehr, wahrgenommen werden.

Darüber hinaus sind aus dem Stand der Technik Kaminsichtscheiben mit Doppelverglasung bekannt. Dabei besteht die innere, dem Feuer zugewandte Scheibe aus einer transparenten, nicht eingefärbten Glaskeramik und die äußere Scheibe ist eine eingefärbte, vorgespannte Glasscheibe. Da das Einfärben von Gläsern deutlich einfacher ist, als das Einfärben von Glaskeramiken, stehen für die äußere Scheibe eine Vielzahl von Gestaltungsmöglichkeiten zur Verfügung. Insbesondere kann auch Grauglas für die äußere Scheibe verwendet werden. Damit kann ein guter Deadfront-Effekt erzielt werden, ohne die Farbe der Flamme zu verändern. Ein Nachteil einer solchen Lösung ist jedoch, dass auch die äußere Glasscheibe im Betrieb heiß wird. Dadurch kann die Vorspannung abgebaut werden. Dies führt dazu, dass die Scheibe durch die langfristige thermische Wechselbelastung zerstört werden kann. Darüber hinaus stellt eine solche Doppelverglasung einen erheblichen konstruktiven Mehraufwand bei der Konstruktion eines Kamins dar. Somit ist eine Doppelverglasung gegenüber einer Einfachverglasung aus Glaskeramik wirtschaftlich und aus Gründen der Betriebssicherheit nachteilig.

Im Unterschied zu Glaskeramiken ist es bei Gläsern aufgrund der anderen, breiteren Absorptionsbanden möglich, den flachen Transmissionsverlauf und den grauen Farbton darzustellen. So beschreibt die US 20150274579 A1 Platten aus vorgespanntem Glas für Induktionskochflächen. Mit dem Gehalt an färbenden Verbindungen von 0,8-1,8 Gew.-% $Fe_2O_3$, 0,02-0,06 Gew.-% CoO, 0-0,005 Gew.-% Se und 0-0,1 Gew.-% $Cr_2O_3$ ist es möglich, den gewünschten flachen Transmissionsverlauf zwischen 430 und 630 nm und ein graues Glas mit Lichttransmission von höchstens 10 % bei 4 mm Dicke herzustellen. Für die Darstellung einer farbneutralen Glaskeramik sind diese Farboxide jedoch nicht geeignet, da ihre Farbwirkungen in Glaskeramiken anders sind und keinen flachen Transmissionsverlauf erzeugen können.

Farbneutrale transparente, eingefärbte Glaskeramiken sind aus dem Stand der Technik nicht bekannt. Dies liegt darin begründet, dass die Absorptionsbanden bei der Kristallisation meist schmaler werden und sich ungünstig verschieben. So färbt z. B. das CoO im Glas blau, in der Glaskeramik purpur. Weiter entstehen in der Glaskeramik neue Absorptionsbanden im kurzwelligen Bereich des Spektrums durch intensiv färbende Fe/Ti- und Sn/Ti- Farbkomplexe.

Aus der US 4 285 728 A sind Glaskeramiken für Kochgeschirre beschrieben.

Es ist Aufgabe der vorliegenden Erfindung, eine kostengünstige Kaminsichtscheibe aus Glaskeramik bereitzustellen, die einen Einblick in den Kamin verhindert, wenn der Kamin nicht in Betrieb ist. Gleichzeitig soll die Kaminsichtscheibe bei Betrieb des Kamins die Flamme ohne Farbveränderung durchscheinen lassen.

Diese Aufgabe wird durch eine Sichtscheibe für einen Kamin gemäß dem Hauptanspruch gelöst. Bevorzugte Ausführungsformen der Erfindung sind in den abhängigen Ansprüchen aufgeführt.

Eine solche Sichtscheibe für einen Kamin umfasst ein Substrat aus transparenter, eingefärbter Lithiumaluminiumsilikat-Glaskeramik, wobei die Glaskeramik einen Lichttransmissionsgrad von 0,1 % bis 50 % aufweist. Die Glaskeramik weist dabei eine Transmissionscharakteristik auf, so dass Licht der Normlichtart D65 nach Durchtritt durch die Glaskeramik einen Farbort im Weißbereich W1 aufweist, der im Chromatizitätsdiagramm ClExyY-2° durch folgende Koordinaten bestimmt ist:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Eine Sichtscheibe für einen Kamin und das Substrat, dass sie umfasst, weisen üblicherweise eine Innenseite und eine Außenseite auf. Die Innenseite ist die Seite der Scheibe beziehungsweise des Substrats, die dem Innenraum, also dem Brennraum des Kamins, zugewandt ist. Die Außenseite ist die Seite, die dem Außenraum zugewandt ist.

Der Lichttransmissionsgrad der Glaskeramik der erfindungsgemäßen Sichtscheibe beträgt mindestens 0,1 %, bevorzugt mindestens 0,2 %, 0,4 %, 0,6 %, 0,8 %, 1 %, 2 %, 3%, 5 %, >10%, >12 %, >15% oder sogar mindestens 20 %. Durch einen solchen Transmissionsgrad ist sichergestellt, dass die Flamme bei Betrieb des Kamins gut sichtbar ist. Je höher der Transmissionsgrad ist, desto besser ist die Sichtbarkeit der Flamme. Unter dem Lichttransmissionsgrad der Glaskeramik ist dabei der aus den Materialeigenschaften der Glaskeramik resultierende Lichttransmissionsgrad bei der jeweiligen Dicke des Substrats zu verstehen.

Der Lichttransmissionsgrad der Glaskeramik der erfindungsgemäßen Sichtscheibe beträgt höchstens 50 %, bevorzugt höchstens 40 %, 35 %, 30 %, besonders bevorzugt höchstens 28 %, 20 %, 15 %, 10 %, 9 %, 8 %, 7 %, 6 %, 5 %, 4,5 % oder sogar höchstens 4 %. Durch einen solchen Transmissionsgrad ist sichergestellt, dass der Einblick in den Innenraum des Kamins verhindert wird, wenn der Kamin nicht in Betrieb ist. Je niedriger der Transmissionsgrad ist, desto besser wird der Einblick in den Innenraum verhindert.

Der Lichttransmissionsgrad kann also beispielsweise in einem der Bereiche 0,1 % bis 50%, 1 % bis 50 %, 2 % bis 40%,5 % bis 40 %, >10 % bis 35 %, >12 % bis 35 %, >15 % bis 30%, 20 % bis 30 %, 20 bis 28 %, 20 % bis 35 % oder 20 % bis 40 % liegen. Andere Kombinationen der Unter- und Obergrenze des Transmissionsgrades sind ebenfalls möglich. Vorzugsweise liegt der Lichttransmissionsgrad der Glaskeramik bei einer Dicke von 4 mm oder einer Dicke von 5 mm in einem dieser Bereiche.

Der Lichttransmissionsgrad kann weiterhin in einem der Bereiche 0,1 % bis 10%, 0,2 % bis 9 %, 0,4 % bis 8%, 0,6 % bis 7 %, 0,8 % bis 6 %, 1 % bis 5 %, 2 % bis 4,5 %, 3 % bis 4 % liegen. Andere Kombinationen der Unter- und Obergrenze des Transmissionsgrades sind ebenfalls möglich. Vorzugsweise liegt der Lichttransmissionsgrad der Glaskeramik bei einer Dicke von 4 mm oder einer Dicke von 5 mm in einem dieser Bereiche.

Der Fachmann wird den geeigneten Lichttransmissionsgrad je nach Bauart des Kamins und je nach gewünschter Scheibengeometrie auswählen. Durch die Bauart und die Scheibengeometrie wird auch die Menge des Gesamt-Lichteinfalls und damit die Anforderung an den Transmissionsgrad beeinflusst.

So wird er beispielsweise für einen Kamin mit dunkler Innenraumverkleidung einen höheren Transmissionsgrad wählen, als für einen sonst identischen Ofen mit heller Innenraumverkleidung. Bei größeren Sichtscheiben fällt mehr Licht in den Innenraum eines Kamins. Deshalb wird der Fachmann den Lichttransmissionsgrad niedriger wählen, je größer die Sichtscheibe ist. Bei Öfen mit mehreren Sichtscheiben wird der Fachmann ebenfalls niedrigere Lichttransmissionsgrade wählen. Je nach Befeuerungsart oder Einstellung der Bedingungen für die Verbrennung, können Flammen heller oder dunkler sein. Der Fachmann wird für hellere Flammen einen niedrigeren Lichttransmissionsgrad wählen als für dunklere Flammen. Zu den üblichen Befeuerungsarten zählen beispielsweise Pellet-, Holz- oder Gasöfen. Zu den Bedingungen für die Verbrennung zählen beispielsweise die Menge an Brennmittel und die Menge an zur Verfügung stehendem Sauerstoff.

Vor allem in dem Bereich 20 % bis 40 % liegt für die meisten Einbausituationen ein besonders ausgeglichenes Verhältnis von Sichtbarkeit der Flamme und Verhinderung des Einblicks in den Innenraum vor. Zusätzlich ist dieser Bereich an Transmissionswerten besonders gut dafür geeignet, um die Sichtscheibe zur Abdeckung einer lichtemittierenden Anzeige zu verwenden.

Insbesondere für holzbefeuerte Kaminöfen, deren Feuer im Betrieb heller leuchtet als das von vergleichbaren Gasöfen oder falls keine lichtemittierenden Anzeigen verwendet werden sollen, ist der Bereich 1 % bis 5 % besonders vorteilhaft. In diesem Bereich ist die Schtbarkeit der Flamme weiterhin ausreichend gewährleistet, der Einblick in den Innenraum aber vorteilhafter weise nochmals reduziert.

Der Lichttransmissionsgrad wird im Wellenlängenbereich 380 nm bis 780 nm unter Verwendung von Licht der Normlichtart D65 gemäß DIN EN 410 bestimmt. Der Lichttransmissionsgrad entspricht auch der Helligkeit Y im CIExyY-2° Farbraum. Die deutsche Umsetzung der internationalen CIE-Norm ist in der DIN 5033 festgelegt. In der Literatur finden sich dafür außerdem die Bezeichnungen Lichttransmission und integrale Transmission.

Eine erfindungsgemäße Sichtscheibe zeichnet sich weiterhin dadurch aus, dass sie eine Glaskeramik umfasst, so dass Licht der Normlichtart D65 nach Durchtritt durch die Glaskeramik bei einer Dicke von 4 mm einen Farbort im Weißbereich W1 aufweist.

| Weißbereich W1 | |
| --- | --- |
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Der Weißbereich W1 ergibt sich dabei als ein Bereich entlang der Schwarzkörperkurve im CIExyY-Farbraum, der von ca. 2.750 K bis ca. 1.000.000 K Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist. Hieraus ergibt sich der folgende Effekt: Licht der Normlichtart D65 hat per Definition eine Farbtemperatur von ca. 6500 K und bei direkter Betrachtung mit einem 2° Beobachter einen Farbort von x = 0,31 und y = 0,33. Mit der vorliegenden Erfindung kann also bei Durchtritt von Licht durch das Substrat der Farbort des Lichtes im Wesentlichen entlang der Schwarzkörperkurve, sowohl zu höheren als auch zu niedrigeren Farbtemperaturen verschoben werden, ohne einen unerwünschten Farbstich zu erzeugen. Ebenso ist es möglich, den Farbort überhaupt nicht, oder zumindest nicht bemerkbar zu ändern. Das Licht einer Flamme, das durch das Substrat hindurchtritt, wird also entweder farblich nicht verändert, oder entlang der Schwarzkörperkurve zu wärmeren oder kälteren Farbtönen verschoben.

Insbesondere Gasflammen mit idealen Verbrennungsbedingungen emittieren kaltweißes Licht. Bei solchen Flammen kann es wünschenswert sein, die Farbtemperatur der Flamme zu wärmeren Farbtemperaturen zu verschieben. Dabei darf die Farbe der Flamme aber nicht so verändert werden, dass sie unnatürlich bunt wirkt. Dies ist mit einer erfindungsgemäßen Sichtscheibe möglich, da die Farbtemperatur nur entlang der Schwarzkörperkurve verschoben wird.

Diese Eigenschaften resultieren unmittelbar aus der Transmissionscharakteristik der Glaskeramik und nicht aus Beschichtungen auf dem Substrat. Vorzugsweise weist die Kaminsichtscheibe keine teiltransparenten Beschichtungen auf. Unter einer teiltransparenten Beschichtung ist dabei eine Beschichtung mit einem Lichttransmissionsgrad zwischen 1 % und 80 % zu verstehen. Dieser Begriff umfasst also sowohl reflektierende als auch absorbierende Beschichtungen.

Der Farbort von Licht nach Durchtritt durch das Substrat kann beispielsweise mit dem Farbmessgerät CS-150 von Konica Minolta gemessen werden. Ebenso ist es möglich das Transmissionsspektrum des Substrats zu messen und damit und mit Hilfe des bekannten Spektrums von D65-Normlicht und der Augenempfindlichkeit eines 2°-Normalbeobachters entsprechend der Vorgaben des CIE den Farbort zu berechnen.

In einer bevorzugten Ausführungsform ist die Sichtscheibe dadurch gekennzeichnet, dass der Farbort von Licht der Normlichtart D65 nach Durchtritt durch die Glaskeramik bei einer Dicke von 4 mm innerhalb eines Weißbereichs W2 liegt, der im Chromatizitätsdiagramm CIExyY-2° durch die folgenden Koordinaten bestimmt ist:

| Weißbereich W2 | |
|---|---|
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

Der Weißbereich W2 ergibt sich dabei als ein Bereich entlang der Schwarzkörperkurve im CIExyY-Farbraum, der von ca. 3.500 K bis ca. 20.000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist. Dieser Bereich erstreckt sich im Vergleich zu W1 also entlang eines kürzeren Abschnitts der Schwarzkörperkurve und weist eine geringere Abweichung in den x- und y-Koordinaten von der Schwarzkörperkurve auf.

Besonders bevorzugt ist die Sichtscheibe dadurch gekennzeichnet, dass Licht der Normlichtart D65 nach Durchtritt durch die Glaskeramik bei einer Dicke von 4 mm einen Farbort im Weißbereich W3 aufweist, der sich entlang der Schwarzkörperkurve im CIExyY-Farbraum von ca. 5.000 K bis ca. 20.000 K Farbtemperatur erstreckt und an der oberen Grenze um einen Wert von ca. y = 0,025 gegenüber der Schwarzkörperkurve nach oben und an der unteren Grenze um ca. y = 0,04 nach unten verschoben ist. Der Weißbereich W3 entspricht also im Wesentlichen dem Bereich W2, beginnt aber erst bei einer Farbtemperatur von 5.000 K. Dieser Farbbereich entspricht Tageslichtweiß und wird vom menschlichen Beobachter entsprechend als besonders reines Weiß wahrgenommen:

| Weißbereich W3 | |
|---|---|
| x | y |
| 0,250 | 0,270 |
| 0,290 | 0,320 |
| 0,340 | 0,370 |
| 0,360 | 0,320 |
| 0,310 | 0,280 |
| 0,270 | 0,240 |

Mit Änderungen der Dicke können sich die Farbkoordinaten einer Glaskeramik verschieben. Bevorzugt ist eine Glaskeramik, bei der für den gesamten Dickenbereich von 2 bis 8 mm Licht der Normlichtart D65 nach Transmission in einem der Weißbereiche W1, W2 oder W3 liegt. Dies kann insbesondere von Glaskeramiken mit einem flachen spektralen Transmissionsverlauf im Bereich des sichtbaren Lichts von 470 bis 630 nm erfüllt werden. In diesem Wellenlängenbereich ist die Empfindlichkeit des menschlichen Auges besonders hoch. Der flache Transmissionsverlauf hat den Vorteil, dass die Farbkoordinaten der Glaskeramik wenig von der Dicke des Artikels abhängen.

Weiter soll der flache Transmissionsverlauf vorzugsweise keine schmalen Absorptionsbanden enthalten bei denen sich die Transmissionswerte benachbarter Wellenlängen maßgeblich unterscheiden. In dem Wellenlängenbereich von 470 bis 680 nm sollen sich die Transmissionswerte innerhalb von allen Bereichen die 50 nm umfassen bevorzugt um weniger als einen Faktor von 2,0, weiter bevorzugt weniger als 1,7 und besonders bevorzugt weniger als 1,5 unterscheiden.

Eine solche Glaskeramik ist besonders vorteilhaft, weil damit Sichtscheiben unterschiedlicher Dicke hergestellt werden könne, ohne die Zusammensetzung der Glaskeramik ändern zu müssen. Bei solchen Glaskeramiken entfallen also Umschmelzzeiten und damit einhergehender Produktionsausschuss.

Der flache Verlauf der Transmissionskurve zeichnet sich bevorzugt aus durch ein Verhältnis des höchsten zum niedrigsten spektralen Transmissionswert im Wellenlängenbereich von 470 bis 630 nm von höchstens 2,5, bevorzugt höchstens 2, weiter bevorzugt höchstens 1,8 bei einer Dicke von 4 mm.

Eine solche Farbwirkung kann beispielsweise erreicht werden, indem die transparenten, eingefärbten LAS-Glaskeramiken 0,003 - 0,5 Gew.-% $MoO_3$ als färbende Komponente enthalten. Ein Mindestgehalt von 0,003 Gew.-% ist bei einer Färbung mittels $MoO_3$ erforderlich, um die verringerte Farbe zu erhalten. Wenn niedrigere Helligkeit gewünscht ist oder bei zunehmenden $Fe_2O_3$ oder $V_2O_5$- Gehalten sind höhere $MoO_3$- Gehalte erforderlich, da diese färbenden Komponenten die Farbkoordinaten ins Gelbe bzw. ins Orangerote verlagern.

Bevorzugt sind zur Einstellung des Farbortes mindestens 0,01, weiter bevorzugt mindestens 0,03 und besonders bevorzugt mindestens 0,05 Gew.-% $MoO_3$ enthalten. Da in der Glaskeramik verschiedene Wertigkeiten des Mo-Atoms vertreten sind, sind die angegebene Gehalte der Zusammensetzung analytisch auf diese Verbindung bezogen. Als Obergrenze beträgt der $MoO_3$- Gehalt 0,5, bevorzugt 0,3, weiter bevorzugt 0,25 und besonders bevorzugt 0,2 Gew.-%. Es hat sich gezeigt, dass die Zugabe von $MoO_3$ eine Absenkung der Glasviskosität bewirkt und günstig ist für die Schmelzbarkeit des Glases. Allerdings wirken insbesondere die reduzierten Molybdänoxid-Spezies auch als Keimbildner und können die Entglasungsstabilität verschlechtern. Daher ist es vorteilhaft, den Gehalt zu begrenzen.

Die Glaskeramiken enthalten weniger als 0,2 Gew.-% $Nd_2O_3$, da bei diesem Farboxid die geringe Farbe über schmale Absorptionsbanden bei Wellenlängen von 526, 584 und 748 nm erreicht wird. Dies führt bei hohem Gehalt an $Nd_2O_3$ zu einem nicht flachen Transmissionsverlauf mit dem Nachteil, dass die Farbkoordinaten der Glaskeramik stärker von der verwendeten Normlichtart abweichen. Der bevorzugte Gehalt an $Nd_2O_3$ beträgt weniger als 0,12 Gew.-% und weiter bevorzugt weniger als 0,06 Gew.-%. Besonders bevorzugt wird kein $Nd_2O_3$ eingesetzt und die Glaskeramik ist technisch frei von $Nd_2O_3$. An Verunreinigungen sind dann in der Regel weniger als 10 ppm enthalten. Dieser Effekt tritt unabhängig von der Zugabe anderer Färbemittel auf. Deshalb enthalten die Glaskeramiken unabhängig von anderen färbenden Bestandteilen weniger als 0,2 Gew.-% $Nd_2O_3$.

Die Glaskeramiken enthalten deshalb 0,003 - 0,5 Gew.-% $MoO_3$ als färbende Komponente und/oder weniger als 0,2 Gew.-% $Nd_2O_3$. In einer besonders bevorzugten Ausführungsform enthalten die Glaskeramiken deshalb 0,003 - 0,5 Gew.-% $MoO_3$ als färbende Komponente und weniger als 0,2 Gew.-% $Nd_2O_3$.

Geeignete Glaskeramiken haben geringe visuelle unauffällige Streuung bei der Durchsicht auf die Flamme. Bei der Messung der Trübung sind sie bevorzugt gekennzeichnet durch einen Haze-Wert von weniger als 10 %, bevorzugt weniger als 6 %, weiter bevorzugt weniger als 4 % und besonders bevorzugt weniger als 2,5 % bei einer Dicke von 4 mm. Der Haze-Wert kann mit einem kommerziellen Messgerät "haze-guard plus" der Firma BYK Gardener nach Norm ASTM D1003-13 mit Normlicht C gemessen werden. In dieser Norm ist der Haze als die Lichtmenge in Prozent definiert, die im Mittel um mehr als 2,5 ° vom einfallenden Lichtstrahl. Der Haze entspricht also einer Weitwinkelstreuung. Der Effekt eines hohen Haze einer Sichtscheibe ist, dass alle Gegenstände hinter der Sichtscheibe, unabhängig von ihrem Abstand zu der Sichtscheibe, mit reduziertem Kontrast dargestellt werden. Die Gegenstände erscheinen also milchig-trüb.

Besonders vorteilhaft ist es, wenn die Glaskeramiken zusätzlich eine hohe Clarity aufweisen. Die Clarity ist ein Maß für die Kleinwinkelstreuung, also Streuung im Winkelbereich kleiner als 2,5 °. Je höher die Clarity ist, desto geringer ist die Kleinwinkelstreuung einer Sichtscheibe. Der Effekt einer niedrigen Clarity ist, dass Gegenstände hinter der Sichtscheibe unscharf beziehungsweise verschwommen dargestellt werden. Je weiter die Gegenstände von der Scheibe entfernt sind, desto unschärfer wirken sie. Da Brennkammern eine gewisse bauliche Tiefe aufweisen, würde eine niedrige Clarity also bewirken, dass Gegenstände wie Holzscheite in der Nähe der Scheibe schärfer zu erkennen wären, als Gegenstände, die weiter von der Scheibe entfernt sind. Ein solcher Effekt ist unerwünscht. Deshalb beträgt die Clarity der Glaskeramik bei einer Dicke von 4 mm mindestens 80 %, vorzugsweise mindestens 90 %, besonders bevorzugt mindestens 95 %.

Der Clarity-Wert kann ebenfalls mit einem kommerziellen Messgerät "haze-guard plus" der Firma BYK Gardener nach Norm ASTM D1003-13 mit Normlicht C gemessen werden.

Der Verlauf der Transmissionskurve im Infraroten und UV erfüllt bei den mit $MoO_3$ gefärbten Glaskeramiken

die Anforderungen für Sichtscheiben für Kamine.

Im gesamten Wellenlängenbereich von 950 nm bis 2500 nm wird bevorzugt eine spektrale Transmission von 25 % nicht unterschritten. Bevorzugt liegt die Transmission in diesem Bereich bei mindestens 30 % und besonders bevorzugt bei mindestens 40 % für 4 mm Dicke.

Bei einer Wellenlänge von 1600 nm soll die Infrarot-Transmission vorzugsweise mehr als 40 % betragen. Bevorzugt beträgt die Infrarot-Transmission 45 - 85 % bei 1600 nm und einer Dicke von 4 mm. Besonders bevorzugt hat die Infrarot-Transmission bei 1600 nm Werte von 50 - 80 %.

Wie bei etablierten transparenten, nicht eingefärbten Glaskeramiken ist im fernen IR ein Transmissionsfenster zwischen etwa 3 und 4,3 $\mu$m gewünscht, da in diesem Wellenlängenbereich die maximale Intensität der Wärmestrahlung von Flammen liegt. Im fernen Infrarot ist bei 3700 nm eine Infrarot-Transmission von mindestens 30 bevorzugt mindestens 40 % wie bei etablierten Glaskeramiken vorteilhaft.

Für Sichtscheiben für Kamine ist die angegebene Durchlässigkeit von InfrarotStrahlung gewünscht, um das Erlebnis des Kaminfeuers zu vertiefen. Die mit $MoO_3$ in der angegebenen Menge gefärbten Glaskeramiken haben dabei gegenüber nicht eingefärbten und mittels $V_2O_3$ eingefärbten Glaskeramiken den Vorteil, dass sie Infrarotstrahlung im IR-A-Band des nahen Infraroten etwas stärker absorbieren. Gleichzeitig weisen sie aber die gleiche Transmission im IR-B-Band auf. Das IR-A-Band umfasst die Wellenlängen von 780 bis 1.400 nm. Das IR-A-Band umfasst die Wellenlängen zwischen 1.400 nm und 3.000 nm. Diese Glaskeramiken filtern also den hochenergetischen Anteil der Infrarotstrahlung stärker aus als die bekannten Glaskeramiken. Dies ist besonders vorteilhaft, da IR-A-Strahlung am stärksten in das menschliche Gewebe eindringen und dabei Reizungen in der Haut verursachen kann. Dieses sehr spezielle Absorptionsverhalten trägt also zusätzlich zur Betriebssicherheit des Kamins bei. Dies ist insbesondere bei Kaminen mit hoher Brennleistung von Bedeutung, da das Verhältnis von emittierter IR-A-Strahlung zu IR-B-Strahlung mit der Temperatur der Flamme zunimmt.

Im Bereich des ultravioletten Lichtes sollen die erfindungsgemäßen Glaskeramiken ebenfalls einen dauerhaften Schutz gewährleisten. Die Transmission bei Wellenlängen kleiner 300 nm sollen vorzugsweise weniger als 0,1 % betragen. Dies kann insbesondere über die Zugabe an $Fe_2O_3$ zur Zusammensetzung der Glaskeramik eingestellt werden, da $Fe_2O_3$ in der Glaskeramik UV-Licht absorbiert.

Alle Angaben zur Transmission im IR und UV beziehen sich wieder auf 4 mm polierte Proben.

Es hat sich gezeigt, dass auch die Einfärbung mit Molybdänoxid auf einem Redoxvorgang basiert. Im kristallisierbaren Ausgangsglas färbt das $MoO_3$ noch relativ schwach. Wie angenommen wird, findet der Redoxvorgang bei der Keramisierung statt, das Molybdän wird reduziert und der Redoxpartner, z. B. $Sn^{2+}$ wird zu $Sn^{4+}$ oxidiert. Die Untersuchungen haben gezeigt, dass für die Einfärbung mit Molybdän eine stärkere Redoxreaktion erforderlich ist als für die Einfärbung mit Vanadium. Deshalb wird das stärker reduzierende Läutermittel $SnO_2$ in Gehalten von 0,05 - 0,8 Gew.-% bevorzugt. Niedrigere Gehalte sind für die Läuterung wenig wirksam, höhere Gehalte begünstigen eine unerwünschte Entglasung bei der Formgebung durch Sn-haltige Kristalle. Bevorzugt liegt der $SnO_2$- Gehalt bei 0,1 bis < 0,7 Gew.-%. Besonders bevorzugt liegt der $SnO_2$-Gehalt unter 0,6 Gew.-%. Die Einfärbung mit anderen Läutermitteln als Redoxpartner wie Antimon- oder Arsenoxid stellt sich als weniger effektiv dar.

Da es sich bei der Färbung durch Molybdänoxid um einen Redoxvorgang handelt, hat auch der Redoxzustand, der im Glas bei der Schmelze eingestellt wird, z.B. durch hohe Schmelztemperaturen und lange Verweilzeiten bei hohen Temperaturen oder Zusätze von reduzierenden Komponenten einen Einfluss. Einen weiteren Einfluss auf die Farbwirkung haben die Keramisierungsbedingungen. Insbesondere führen hohe Keramisierungstemperaturen und längere Keramisierungszeiten zu einer stärkeren Einfärbung. Zusätze von anderen polyvalenten Komponenten wie $Fe_2O_3$, $V_2O_5$, $CeO_2$, $TiO_2$ können neben ihrer eigenen Farbwirkung den Redoxvorgang beeinflussen und so die Molybdänoxid-Einfärbung hinsichtlich Helligkeit und Farbkoordinaten der Glaskeramik beeinflussen. Die Komponente $Fe_2O_3$ verringert die Färbung durch $MoO_3$ und verschiebt den Farbort ins Gelbe. Höhere Gehalte als 0,25 Gew.-% sind daher ungünstig. Bevorzugt beträgt der $Fe_2O_3$-Gehalt maximal 0,15 Gew.-% und besonders bevorzugt maximal 0,1 Gew.-%. Wegen der hohen Kosten eisenarmer Rohstoffe ist es unwirtschaftlich, den $Fe_2O_3$-Gehalt auf Werte unter 0,005 Gew.-% zu verringern. Eine bevorzugte Untergrenze ist ein Gehalt von größer als 0,03 Gew.-% und besonders bevorzugt größer als 0,05 Gew.-%.

Die Komponente $V_2O_5$ verschiebt den Farbort ins Orangerote. Die Komponente eignet sich für eine Kombinationsfärbung mit $MoO_3$. Allerdings färbt $V_2O_5$ stärker, so dass der Gehalt begrenzt werden muss, um die erfindungsgemäße geringe Farbe zu erreichen. Höhere Gehalte als 0,02 Gew.-% sind daher ungünstig. Bevorzugt beträgt der $V_2O_5$-Gehalt weniger als 0,015 Gew.-% und weiter bevorzugt maximal 0,01 Gew.-%. Besonders bevorzugt wird kein $V_2O_5$ der Zusammensetzung beigegeben und es liegen nur Verunreinigungen von wenigen, meist 1-15 ppm, in der Glaskeramik vor. Das Molybdänoxid ist also vorzugsweise das Hauptfärbemittel und es gilt die Komponentenbeziehung (in Gew.-%) $MoO_3$/ $V_2O_5$ > 1, bevorzugt > 3, weiter bevorzugt > 5 und besonders bevorzugt > 10.

Da $V_2O_5$ auch schon in sehr geringen Mengen den Farbort von transmittiertem Licht verschiebt, beträgt der Gehalt an $V_2O_5$ in der Glaskeramik auch unabhängig von der Art des Verwendeten Hauptfärbemittels vorzugsweise weniger als 0,02 Gew.-%, besonders bevorzugt weniger als 0,015 Gew.-, insbesondere maximal 0,01 Gew.-% und ganz besonders wird unabhängig vom Färbemittel kein $V_2O_5$ beigegeben, so dass es nur als Verunreinigung vorliegt.

$TiO_2$ ist als Komponente ist für die Keimbildung vorteilhaft. Da auch die Färbung durch das Molybdänoxid unterstützt wird, d.h. die Zugabe zu niedrigeren Werten der Lichttransmission Y führt, ist ein Mindestgehalt von größer als 1,6 Gew.-% bevorzugt. Bevorzugt ist ein Mindestgehalt von 2,5, weiter bevorzugt von 3,0 und besonders bevorzugt von 3,5 Gew.-%.

$TiO_2$ ist also der wichtigste Keimbildner und es gilt die Komponenten-beziehung (in Gew.-%) $TiO_2/ZrO_2 > 1$, bevorzugt > 2, weiter bevorzugt > 3.

Neben den genannten polyvalenten färbenden Komponenten $Fe_2O_3$ und $V_2O_5$ können auch weitere färbende Komponenten wie z.B. Chrom-, Mangan-, Kobalt-, Nickel-, Kupfer-, Tantal-, Niob-, Cer-, Wolfram-, Wismut-, Selen-, Selten Erd-, Sulfid- Verbindungen eingesetzt werden, um die Farbkoordinaten der Glaskeramik einzustellen. Eine Besonderheit nehmen dabei polyvalente Elemente ein, da sie zusätzlich den Redoxvorgang, der zur Einfärbung des Molybdäns führt, beeinflussen können. Der Gehalt färbender Komponenten ist bevorzugt auf Mengen von maximal 2 Gew.-%, weiter bevorzugt unter 1 Gew.-% begrenzt. Außerdem können diese Verbindungen die Transmission im Infrarot absenken.

Der Gehalt an $Cr_2O_3$ beträgt jedoch bevorzugt weniger als 0,02 Gew%, besonders bevorzugt weniger als 0,01 Gew% und insbesondere ist die Glaskeramik bis auf unvermeidbare Verunreinigungen frei von $Cr_2O_3$.

In einer bevorzugten Ausführungsform enthält die Lithiumaluminiumsilikat-Glaskeramik die Komponenten (in Gew.-% auf Oxidbasis):

| | |
|---|---|
| $Li_2O$ | 2-5,5 |
| $Al_2O_3$ | 16 - 26 |
| $SiO_2$ | 58 - 72 |
| $MoO_3$ | 0,003 - 0,5 |

Die Oxide $Li_2O$, $Al_2O_3$ und $SiO_2$ sind in den angegebenen Grenzen notwendige Bestandteile der Hochquarz- und/oder Keatit-Mischkristallphasen.

Der Gehalt an $Li_2O$ soll 2 bis 5,5 Gew.-% betragen. Der Mindestgehalt ist für die Bildung der Kristalle mit niedriger thermischer Ausdehnung erforderlich, doch führen höhere Gehalte als 5,5 Gew.-% im Herstellprozess häufig zu einer ungewollten Entglasung. Bevorzugt ist der $Li_2O$-Gehalt größer als 2,8 Gew.-%, weil die Komponente die Färbung mit $MoO_3$ verstärkt. Ein Gehalt von 3 bis 5 Gew.-% führt zu besonders guten Ergebnissen. Der ausgewählte Gehalt an $Al_2O_3$ beträgt 16-26 Gew.-%. Höhere Gehalte sind nachteilig wegen der Neigung zu Entglasung von Mullit bei der Formgebung. Der Mindestgehalt beträgt 16 Gew.-%. Bevorzugt ist ein Bereich von 18-25 Gew.-%.

Der $SiO_2$-Gehalt soll maximal 72 Gew.-% betragen, weil diese Komponente die Viskosität des Glases stark erhöht. Bevorzugt wird diese Komponente weiter auf Werte von maximal 70 und weiter maximal 69 Gew.-% begrenzt. Für gutes Einschmelzen der Gläser und für niedrige Formgebungstemperaturen sind höhere Gehalte von $SiO_2$ unwirtschaftlich. Der Mindestgehalt an $SiO_2$ soll 58 Gew.-%, insbesondere 60 Gew.-% betragen, weil dies für die geforderten Anwendungseigenschaften, wie z.B. chemische Beständigkeit und Temperaturbelastbarkeit vorteilhaft ist. Darüber hinaus wird die Streuung bei kurzen Keramisierungszeiten verringert.

Gemäß einer weiteren Ausführungsform besitzt die Lithiumaluminiumsilikat-Glaskeramik, bzw. der daraus hergestellte Artikel, bevorzugt eine Zusammensetzung, die in Gew.-% auf Oxidbasis im Wesentlichen besteht aus:

| | |
|---|---|
| $Li_2O$ | 2 - 5,5 |
| $\Sigma$ Na20 + $K_2O$ | 0,1 - <4 |
| MgO | 0 - 3 |
| $\Sigma$ CaO + SrO + BaO | 0 - 5 |
| ZnO | 0 - 4 |
| $B_2O_3$ | 0 - 3 |
| $Al_2O_3$ | 16 - 26 |
| $SiO_2$ | 58 - 72 |
| $TiO_2$ | 1,5 - 5,5 |
| $ZrO_2$ | 0 - 2,5 |
| $SnO_2$ | 0 - < 0,7 |
| $\Sigma$ $TiO_2$ + $ZrO_2$ + $SnO_2$ | 3 - 6,5 |
| $P_2O_5$ | 0 - 5 |
| $MoO_3$ | 0,01 - 0,3 |

(fortgesetzt)

| | |
|---|---|
| $Fe_2O_3$ | 0,008 - 0,025 |
| $V_2O_5$ | 0 - 0,02 |

Der Begriff "im Wesentlichen besteht aus" bedeutet, dass die aufgeführten Komponenten wenigstens 96 % in der Regel 98 % der Gesamtzusammensetzung betragen sollen.

Die Zugabe der Alkalien $Na_2O$, $K_2O$ und der Erdalkalien CaO, SrO, BaO sowie von $B_2O_3$ verbessern die Schmelzbarkeit und die Entglasungsstabilität bei der Formgebung des Glases. Da diese Komponenten nicht in die Kristallphase eingebaut werden, sondern im Wesentlichen in der Restglasphase der Glaskeramik verbleiben, müssen ihre Gehalte begrenzt werden. Zu hohe Gehalte erhöhen die thermische Ausdehnung der Glaskeramik in unzulässiger Weise und beeinträchtigen das Kristallisationsverhalten bei der Umwandlung des kristallisierbaren Ausgangsglases in die Glaskeramik, hier insbesondere zu Lasten kurzer Keramisierungszeiten. Außerdem wirken sich höhere Gehalte ungünstig auf die Zeit-/Temperaturbelastbarkeit der Glaskeramik aus. Die Summe der Alkalien $Na_2O$ + $K_2O$ soll mindestens 0,1, bevorzugt mindestens 0,2 Gew.-% betragen. Als Obergrenze sind weniger als 4 Gew.-%, bevorzugt weniger als 3 Gew.-% vorteilhaft.

Die Zugabe der Alkalien $Na_2O$, $K_2O$ und der Erdalkalien CaO, SrO, BaO sowie von $B_2O_3$ verbessern die Schmelzbarkeit und die Entglasungsstabilität bei der Formgebung des Glases. Da diese Komponenten nicht in die Kristallphase eingebaut werden, sondern im Wesentlichen in der Restglasphase der Glaskeramik verbleiben, müssen ihre Gehalte begrenzt werden. Zu hohe Gehalte erhöhen die thermische Ausdehnung der Glaskeramik in unzulässiger Weise und beeinträchtigen das Kristallisationsverhalten bei der Umwandlung des kristallisierbaren Ausgangsglases in die Glaskeramik, hier insbesondere zu Lasten kurzer Keramisierungszeiten. Außerdem wirken sich höhere Gehalte ungünstig auf die Zeit-/Temperaturbelastbarkeit der Glaskeramik aus. Die Summe der Alkalien $Na_2O$ + $K_2O$ soll mindestens 0,1, bevorzugt mindestens 0,2 Gew.-% betragen. Als Obergrenze sind weniger als 4 Gew.-%, bevorzugt weniger als 3 Gew.-% vorteilhaft.

Die genannten Alkalien, $B_2O_3$ und Erdalkalien reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Die optionale Zugabe von $B_2O_3$ erhöht die Entglasungsfestigkeit. Höhere Gehalte als 3 Gew.-% sind ungünstig, da sie die Streuung der Glaskeramik erhöhen. Bevorzugt sind maximal 2 Gew.-% $B_2O_3$ enthalten.

Als weitere Komponenten können MgO, ZnO und $P_2O_5$ in die Hochquarz-Mischkristalle eingebaut werden. Der ZnO-Gehalt ist wegen der Problematik der Bildung unerwünschter Kristallphasen wie Zink-Spinell (Gahnit) bei der Keramisierung auf Werte von höchstens 4 Gew.-%, bevorzugt höchstens 3 Gew.-% begrenzt. Der MgO-Gehalt ist auf maximal 3 Gew.-%, bevorzugt bis zu 1,5 Gew.-% begrenzt, weil er sonst den Ausdehnungskoeffizienten der Glaskeramik unzulässig erhöht. Die Zugabe an $P_2O_5$ kann bis zu 5 Gew.-% betragen und ist bevorzugt auf 3 % begrenzt. Die Zugabe von $P_2O_5$ ist günstig für die Entglasungsfestigkeit. Höhere Gehalte wirken sich ungünstig auf die Säurebeständigkeit und kurze Keramisierungszeiten aus.

$TiO_2$, $ZrO_2$ und $SnO_2$ sind als Keimbildner vorgesehen. Die Gesamtsumme soll 3 bis 6,5 Gew.-% betragen. Die Mindestmenge ist erforderlich, damit sich bei der Keimbildung Keimkristalle in hoher Dichte bilden, auf denen die Hochquarz-Mischkristalle in hoher Anzahl verknüpft mit kleinen Kristallitgrößen aufwachsen. Höhere Gehalte als in der Summe 6,5 Gew.-% verschlechtern die Entglasungsfestigkeit bei der Formgebung. Dies gilt besonders für die Komponente $SnO_2$, die bevorzugt auf Werte von kleiner 0,7 Gew.-% begrenzt ist und die Komponente $ZrO_2$, die auf 2,5 Gew.-% begrenzt ist. Die Komponente $TiO_2$ ist ein sehr wirksamer und für kurze Keramisierungszeiten wichtiger Bestandteil. Der $TiO_2$-Gehalt soll mindestens 1,5 Gew.-% und höchstens 5,5 Gew.-% betragen. Höhere Gehalte als 5,5 Gew.-% sind für die Entglasungsfestigkeit nachteilig und können in der Glaskeramik unerwünschte Ti-haltige Kristallphasen, wie z. B. Rutil induzieren.

Für eine wirtschaftliche Herstellung soll das kristallisierbare Ausgangsglas gut schmelzbar und läuterbar sein, über eine hohe Entglasungsfestigkeit verfügen und in kurzen Zeiten keramisierbar sein. Um die Viskosität der Glasschmelze abzusenken hat es sich als notwendig erwiesen, den maximalen Gehalt an $SiO_2$, $Al_2O_3$, $ZrO_2$ weiter zu begrenzen, während die Mindestgehalte an Alkalien $Na_2O$ + $K_2O$, Erdalkalien CaO + SrO + BaO bei höheren Werten gewählt werden.

Um die Forderungen an kurze Keramisierungszeiten und gute Entglasungsfestigkeit weiter zu optimieren sind die Gehalte der Keimbildner einzugrenzen sowie die maximalen Gehalte an $Na_2O$+$K_2O$, $B_2O_3$, CaO + SrO + BaO und $P_2O_5$ einzugrenzen.

Bevorzugt besitzt die Lithiumaluminiumsilikat-Glaskeramik diesbezüglich eine Zusammensetzung, die in Gew.-% auf Oxidbasis im Wesentlichen besteht aus:

| | |
|---|---|
| $Li_2O$ | 3 - 5 |
| $\Sigma\ Na_2O + K_2O$ | 0,2 - <3 |
| $MgO$ | 0 - 1,5 |
| $\Sigma\ CaO + SrO + BaO$ | 0,2 - 4 |
| $ZnO$ | 0 - 3 |
| $B_2O_3$ | 0 - 2 |
| $Al_2O_3$ | 18 - 24 |
| $SiO_2$ | 60 - 69 |
| $TiO_2$ | 1,5 - 5,5 |
| $ZrO_2$ | 0 - 2,5 |
| $SnO_2$ | 0,1 - <0,7 |
| $\Sigma\ TiO_2 + ZrO_2 + SnO_2$ | 3,5 - 6,3 |
| $P_2O_5$ | 0 - 3 |
| $MoO_3$ | 0,01 - 0,25 |
| $Fe_2O_3$ | >0,03 - 0,015 |
| $V_2O_5$ | 0 - <0,01 |

Besonders bevorzugt ist $ZrO_2$ an der Keimbildung beteiligt und der $ZrO_2$-Gehalt beträgt 0,3 - <2,2 Gew.-%. Dies ist für die Anforderungen, die an die Verwendung der Glaskeramiken gestellt werden, so zum Beispiel die chemische Beständigkeit, vorteilhaft.

Die erfindungsgemäßen Glaskeramiken enthalten optional Zusätze chemischer Läutermittel wie $As_2O_3$, $Sb_2O_3$, $CeO_2$ und von Läuterzusätzen wie Manganoxid, Sulfat-, Halogenid-Verbindungen (F, Cl, Br) in Gesamtgehalten bis zu 2,0 Gew.-%.

Bevorzugt sind die Glaskeramiken technisch frei von den unter Umweltgesichtspunkten kritischen Läutermitteln Arsen- und Antimonoxid. Das heißt die Glaskeramiken enthalten diese Komponenten nur als Rohstoffverunreinigungen. Als Verunreinigung liegen beide Komponenten jeweils in Gehalten von weniger als 1000 ppm, bevorzugt in Gehalten von weniger als 500 ppm vor.

Bevorzugt wird auch auf den Zusatz von Halogenidverbindungen als Läuterhilfsmittel verzichtet. Diese bilden bei der Schmelze und Formgebung korrosive Verbindungen wie HF, HCl und HBr, die für die Lebensdauer der Aggregate nachteilig sind. Die Gläser und Glaskeramiken sind daher bis auf unvermeidliche Spuren frei von F, Cl, Br, und deren einzelne Gehalte betragen weniger als 500 ppm.

Verbindungen einer Vielzahl von Elementen wie z. B. F, Cl, den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Ta, Y, Seltene Erden, Bi, V, Cr, Ni können in geringen Anteilen, typischerweise im ppm-Bereich, enthalten sein.

Der Wassergehalt der kristallisierbaren Gläser zur Herstellung der Glaskeramiken liegt abhängig von der Wahl der Gemengerohstoffe und den Prozessbedingungen bei der Schmelze vorzugsweise zwischen 0,015 und 0,06 mol/l. Dies entspricht $\beta$-OH-Werten von 0,16 bis 0,64 $mm^{-1}$. Bei der Umwandlung in die Glaskeramik ändert sich die IR-Bande, die zur Bestimmung des Wassergehaltes herangezogen wird. Dadurch erhöht sich messbedingt der $\beta$-OH-Wert für die Glaskeramik um einen Faktor von ca. 1,6, ohne dass sich dabei der Wassergehalt ändert. Dies und die Methode zur Bestimmung der $\beta$-OH-Werte ist z. B. in der EP 1074520 A1 beschrieben.

Diese Zusammensetzungen erlauben günstige Fertigungseigenschaften für eine wirtschaftliche Herstellung, wie kostengünstige Gemengerohstoffe, niedrige Schmelz- und Formgebungstemperaturen, gute Entglasungsfestigkeit und kurze Keramisierungszeiten.

Niedrige Schmelz- und Formgebungstemperaturen werden durch niedrigere Viskosität der Glasschmelze bei hohen Temperaturen sichergestellt. Hierfür sind die Temperatur, bei der die Viskosität der Glasschmelze $10^2$ dPas beträgt, und die Verarbeitungstemperatur $V_A$, bei der die Viskosität der Glasschmelze $10^4$ dPas beträgt charakteristische Größen. Die $10^2$-Temperatur liegt für die erfindungsgemäßen Gläser vorzugsweise bei weniger als 1775 °C, bevorzugt weniger als 1760 °C und die Verarbeitungstemperatur vorzugsweise unter 1335°C, bevorzugt unter 1325 °C. Da eine niedrige Glasviskosität auch den Aufstieg von Blasen und damit die Läuterung begünstigt, ist eine niedrige Glasviskosität auch vorteilhaft für die Blasenqualität.

Das kristallisierbare Glas verfügt bei der Formgebung aus der Schmelze über eine ausreichende Entglasungsfestigkeit. Bei der Formgebung im Kontakt mit dem Formgebungsmaterial (z. B. Edelmetall bei der Ziehdüse im Walzprozess) bilden sich im Glas keine für die Festigkeit der Glaskeramik kritischen und visuell auffälligen Kristalle. Die Grenztemperatur, unterhalb der es zu kritischen Entglasungen kommt, d.h. die obere Entglasungsgrenze (OEG), liegt vorzugsweise unter der Verarbeitungstemperatur $V_A$ und bevorzugt 10°C darunter. Bei dieser Mindestdifferenz wird für den Formgebungsprozess ein ausreichendes Prozessfenster definiert. Besonders vorteilhaft ist ein Prozessfenster $V_A$-OEG, das mindestens 20 °C beträgt. Die Differenz $V_A$-OEG ist also ein Maß für die Entglasungsfestigkeit.

Die kristallisierbaren Gläser werden durch den weiter unten beschriebenen mehrstufigen Temperaturprozess in die Glaskeramiken umgewandelt.

In einer ersten Ausführungsform ist die Glaskeramik transparent eingefärbt und enthält Hochquarz-Mischkristalle als Hauptkristallphase.

Für die Minimierung der Streuung ist es vorteilhaft, die Kristallitgrößen zu minimieren. Eine wegen zunehmender Streuung bevorzugte Obergrenze ist eine mittlere Kristallitgröße kleiner als 70 nm, bevorzugt kleiner als 60 nm.

Der Kristallphasenanteil der Hochquarz-Mischkristalle der Glaskeramik beträgt vorzugsweise wenigstens 50 Gew.-% und vorzugsweise höchstens 80 Gew.-%. Dieser Bereich ist vorteilhaft, um die gewünschten mechanischen und thermischen Eigenschaften der Glaskeramik zu erhalten. Besonders ist ein Anteil von 55-75 Gew.-% bevorzugt.

Bevorzugt weicht die mittlere thermische Ausdehnung im Bereich der Anwendungstemperaturen, also im Bereich 20 bis 700 °C höchstens $0,5 \cdot 10^{-6}$/K von der Nullausdehnung ab.

In einer anderen Ausführungsform enthält die transparente eingefärbte Glaskeramik Keatit-Mischkristalle als Hauptkristallphase. Die mittlere Kristallitgröße ist bevorzugt kleiner als 150 nm, damit die Streuung die zulässigen Haze-Werte nicht überschreitet. Der Kristallphasenanteil beträgt bevorzugt mehr als 55 Gew.-%.

Die Glaskeramiken können beide Kristallarten enthalten. Aus wirtschaftlichen Gründen ist es vorteilhaft, wenn aus der gleichen Zusammensetzung des kristallisierbaren Lithiumaluminiumsilikat-Glases sowohl transparente, eingefärbte Glaskeramiken mit Hochquarz-Mischkristallen als Hauptkristallphase als auch Glaskeramiken mit Keatit-Mischkristallen als Hauptkristallphase hergestellt werden können.

Erfindungsgemäße Sichtscheiben weisen vorzugsweise eine Dicke von mindestens 2 mm, bevorzugt mindestens 3 mm und von höchstens 20 mm, vorzugsweise höchstens 10 mm, besonders bevorzugt höchstens 6 mm auf. Bei geringeren Dicken wird die Festigkeit beeinträchtigt, höhere Dicken sind aufgrund des höheren Materialbedarfs weniger wirtschaftlich.

Geeignete Formgebungsverfahren für die Scheiben sind insbesondere Walzen, Ziehen und Floaten. Bevorzugtes Formgebungsverfahren aus der Glasschmelze ist das über zwei Walzen, da dieses Verfahren wegen der schnelleren Abkühlung Vorteile hinsichtlich der Entglasung hat.

Die Sichtscheiben können dabei eben ausgeformt sein. Sie können insbesondere auf beiden Seiten glatt sein. Weiterhin können sie auch dreidimensional verformt sein. Beispielsweise können abgekantete, gewinkelte oder gewölbte Geometrien verwendet werden. Die Scheiben können rechtwinklig oder in anderen Formen vorliegen sowie neben ebenen Bereichen dreidimensional verformte Bereiche wie beispielsweise eingewalzte Stege, Rillen oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner, Infrarotstrahler oder durch Schwerkraftsenken, vorgenommen. Die nachgelagerte Heißformgebung findet in der Regel unmittelbar vor der Keramisierung statt.

Um die räumliche Sicht in den Kaminofen zu erhöhen können die Sichtscheiben in rundgebogener oder winklig gebogener Form eingesetzt werden. Die rundgebogenen Kaminsichtscheiben können durch sogenanntes Schwerkraftsenken hergestellt werden. Für winklig gebogene Scheiben gibt es spezielle, beispielsweise gasbetriebene Biegemaschinen oder robotergeführte Biegemaschinen. Unter winklig gebogenen Scheiben sind insbesondere Scheiben mit wenigstens zwei flachen Bereichen zu verstehen, wobei zwei benachbarte flache Bereiche über einen axial gekrümmten Bereich miteinander verbunden sind.

Durch Bohren oder Schleifen und ggf. anschließendem Polieren können auch Geometrien wie Bohrungen oder Facetten angebracht werden. Beim Keramisieren wird mit unterstützenden keramischen Formen, z. B. ebenen Unterlagen gearbeitet, um unkontrollierte Änderungen der geometrischen Form zu vermeiden. Eine nachträgliche Politur einer oder beider Seiten ist optional möglich, wenn es die Anwendung erfordert.

Ein Verfahren zur Herstellung einer transparenten, eingefärbten Lithiumaluminiumsilikat-Glaskeramik, enthaltend 0,003-0,5 Gew.-% $MoO_3$ als färbende Komponente und/oder weniger als 0,2 Gew.-% $Nd_2O_3$, ist dadurch gekennzeichnet, dass die Temperatur der Glasschmelze mindestens 1600 °C erreicht. Diese Temperatur der Glasschmelze ist erforderlich, um einen ausreichenden reduzierten Zustand des Ausgangsglases für die Keramisierung einzustellen. Dies ist erforderlich, damit ausreichende Konzentrationen von polyvalenten Komponenten in der niedrigeren Wertigkeitsstufe vorliegen, so zum Beispiel $As^{3+}$, $Sn^{2+}$, $Ti^{3+}$, die befähigt sind, das Molybdän bei der Keramisierung in den färbenden reduzierten Zustand zu überführen, wobei sie als Redoxpartner aufoxidiert werden. Bei sehr reduziert eingestellter Glasschmelze kann bereits ein Teil des Molybdäns reduziert werden und die Gläser einfärben, in der Regel sind die Ausgangsgläser noch weitgehend ungefärbt. Bevorzugt beträgt die Schmelztemperatur wenigstens 1640 °C.

Der Mechanismus der Einstellung des reduzierten Zustandes bei hohen Temperaturen ist dabei der, dass $O_2$-Läuterblasen gebildet werden, die in der Glasschmelze aufsteigen und diese verlassen, wobei diese reduziert wird

Wie in der Schrift WO 2010102859 A1 aufgezeigt, kann der Redoxzustand des kristallisierbaren Ausgangsglases durch Messung des Sauerstoffpartialdrucks des Glases als Funktion der Temperatur pO$_2$(T) bestimmt werden.

Es hat sich gezeigt, dass ein gezielt eingestellter Redoxzustand des kristallisierbaren Ausgangsglases, der bei der Schmelze vorgenommen wird, eine günstige Wirkung auf den gewünschten Transmissionsverlauf der Glaskeramik hat. Dies verstärkt die Farbwirkung des Molybdänoxids und es werden für gleiche Einfärbung geringere Gehalte benötigt, was wirtschaftlich vorteilhaft ist.

Bei einem bei der Schmelze zu reduziert eingestellten kristallisierbaren Glas befinden sich größere Anteile von Molybdän in einer niedrigen Wertigkeit und führen bereits im Glas zu einer unkontrollierbaren Keimbildung und Kristallisation. Meist sind dies Hochquarz-Mischkristallphasen. Bei dem erfindungsgemäßen Verfahren wird also das Glas nur soweit reduziert, dass noch keine unerwünschte Kristallisation im kristallisierbaren Glas auftritt.

Folgende Verfahrensparameter sind geeignet, das Glas zu reduzieren:

- der Zusatz von Reduktionsmitteln in pulvriger und/oder flüssiger Form zum Ausgangsgemenge. Dafür eignen sich Metalle, Kohlenstoff und/oder aufoxidierbare Kohlenstoff- bzw. Metallverbindungen wie z.B. Al- oder Si-Pulver, Zucker, Holzkohle, Ruß, SiC, TiC, MgS, ZnS,
- auch gasförmige Reduktionsmittel, wie z.B. Formiergas sind geeignet,
- die Verringerung des Zusatzes von Nitratverbindungen im Gemenge,
- die Erhöhung des Scherbenanteils im Gemengesatz,
- hohe Schmelz- und Läutertemperaturen und die Verweilzeit der Schmelze bei hohen Temperaturen.

Weiterhin ist das Verfahren zur Herstellung der Glaskeramiken gekennzeichnet durch die Schritte:

a) Bereitstellen eines Gemengesatzes aus technischen Rohstoffen enthaltend 20 bis 80 Gew.-% Scherben;
b) Schmelze des Gemengesatzes und Läutern bei Temperaturen, die mindestens 1600 °C erreichen;
c) Einstellung eines reduzierten Zustandes im Glas, bei dem keine Kristalle im abgekühlten Glas gebildet werden.
c) Abkühlen der Glasschmelze und Formgebung bei Temperaturen in der Nähe der Verarbeitungstemperatur V$_A$, wobei die gewünschte Form des Artikels erzeugt wird;
d) Kühlen in einem Entspannungsofen auf Raumtemperatur, wobei unerwünschte Spannungen im Glas entfernt werden.

Der Gemengesatz ist so ausgebildet, dass nach der Schmelze ein Glas mit der erfindungsgemäßen Zusammensetzung und Eigenschaften entsteht. Durch den Scherbenzusatz von 20 bis 80 Gew.-% wird das Einschmelzen begünstigt, und es lassen sich höhere Wannendurchsätze erhalten. Es kann in konventionellen Schmelzwannen bei maximalen Temperaturen der Glasschmelze von weniger als 1750 °C, oder mit einem zusätzlichen Hochtemperatur-Läuteraggregat bei höheren maximalen Temperaturen geläutert werden.

Bei der Formgebung werden die etablierten Glastechnologien, wie Gießen, Pressen, Walzen, Ziehen, insbesondere Down-Draw und Floaten bevorzugt. Zur Vermeidung von Spannungen werden die Scheiben nach der Heißformgebung in einem Kühlofen auf Raumtemperatur abgekühlt. Aus diesem Glasband werden nach Sicherstellung der Qualität hinsichtlich von Volumen- und Oberflächendefekten Platten der gewünschten Größe hergestellt.

Der nächste Prozessschritt ist die Umwandlung des kristallisierbaren Glases in die Glaskeramik. Diese Keramisierung wird auf ebenen oder dreidimensionalen, meist keramischen Unterlagen, durchgeführt, um unkontrollierte Änderungen der geometrischen Form zu vermeiden. Eine nachträgliche Politur einer oder beider Seiten ist optional möglich wenn es die Anwendung erfordert. Bei dem erfindungsgemäßen Verfahren zur Keramisierung wird das thermisch entspannte kristallisierbare Ausgangsglas bei maximalen Temperaturen von 1100 °C in die Glaskeramik umgewandelt. Bevorzugt beträgt die maximale Temperatur weniger als 980 °C. Niedrige maximale Kristallisationstemperaturen sind für niedrige Werte der mittleren Kristallgrößen und damit verbunden geringe Streuung vorteilhaft.

Das kristallisierbare Glas kann in einem Rollenofen keramisiert werden. Bei dieser Keramisierung wird das thermisch entspannte kristallisierbare Ausgangsglas innerhalb von 3 min bis 60 min auf den Temperaturbereich von etwa 680 °C erhitzt. Die erforderlichen hohen Heizraten können großtechnisch in Rollenöfen realisiert werden. Dieser Temperaturbereich von etwa 680 °C entspricht in etwa der Transformationstemperatur des Glases. Oberhalb dieser Temperatur bis etwa 800 °C ist der Bereich mit hohen Keimbildungsraten. Der Temperaturbereich der Keimbildung wird über einen Zeitraum von 10 Minuten bis 100 Minuten durchfahren. Danach wird die Temperatur des Kristallisationskeime enthaltenden Glases innerhalb von 5 Minuten bis 80 Minuten auf eine Temperatur von 850 °C bis 1200 °C, die sich durch hohe Kristallwachstumsgeschwindigkeiten der Kristallphasen auszeichnet, erhöht. Bei der Herstellung von Glaskeramiken mit Hochquarz-Mischkristallen als Hauptkristallphase ist die Temperatur auf maximal 970 °C begrenzt. Diese maximale Temperatur wird bis zu 60 Minuten gehalten. Dabei wird das Gefüge der Glaskeramik homogenisiert und die optischen, physikalischen und chemischen Eigenschaften eingestellt. Die erhaltene Glaskeramik wird in insgesamt weniger als 150 Minuten auf Raumtemperatur abgekühlt. Bevorzugt wird die Abkühlung bis ca. 700 °C mit langsamerer Rate durchgeführt. Bei der Herstellung von Glaskeramiken mit Keatit-Mischkristallen als Hauptkristallphase erfolgt vor der Abkühlung ein zusätzlicher Schritt zur Umwandlung der Kristallphase im Temperaturbereich von bis zu 1200 °C. Je höher diese Temperatur gewählt wird und je länger sie gehalten wird, desto stärker wird die aus dem Wachstum der Keatit-Kristalle resultierende Lichtstreuung.

Durch die Wahl der Zusammensetzung mit $MoO_3$ zur Einfärbung, über die Einstellung des Redoxzustandes des kristallisierbaren Glases und durch die Herstellparameter bei der Schmelze und Keramisierung ist mit den beschriebenen transparenten eingefärbten Glaskeramiken ein weiter Bereich des Lichttransmissionsgrades darstellbar, der je nach Verwendung bevorzugt bei 4 mm Dicke Werte von 0,1 bis 50 % besitzt.

Die thermische Ausdehnung dieser Glaskeramiken kann wie beschrieben über die Zusammensetzung und die Keramisierung eingestellt werden. Vorzugsweise wird der thermische Ausdehnungskoeffizient CTE im Temperaturbereich zwischen 20 und 700 °C auf einen Wert im Bereich -2,5 bis +2,5 x $10^{-6}$/K, bevorzugt im Bereich -1,5 bis +1,5 x $10^{-6}$/K und besonders bevorzugt im Bereich -0,5 bis +0,5 x $10^{-6}$/K eingestellt. Der thermische Ausdehnungskoeffizient CTE im Temperaturbereich zwischen 20 und 700 °C wird auch als CTE $\alpha_{20/700}$ oder einfach nur $\alpha_{20/700}$ bezeichnet. Durch die Wahl des CTE in einem dieser Bereiche wird die Glaskeramik insbesondere sehr gut belastbar bezüglich hoher Bertriebstemperaturen und bezüglich Temperaturwechselbelastungen.

Die beschriebenen Glaskeramiken der vorliegenden Erfindung erfüllen die Anforderungen an die Transparenz und Streuung, haben geringe Buntheit und genügen allen weiteren Anforderungen, die an ihre Verwendung gestellt werden.

Dazu zählen unter anderem eine geringe thermische Ausdehnung, hohe chemische Beständigkeit, mechanische Festigkeit, Temperaturbelastbarkeit und hohe Temperatur/Zeitbelastbarkeit hinsichtlich Änderungen dieser Eigenschaften.

Es ist möglich, Beschichtungen auf der Innen- und/oder Außenseite der Sichtscheibe auf das Substrat aufzubringen. Dabei sind die bekannten verschiedenen Arten von Beschichtungen wie z. B. mit organischen oder anorganischen Dekorfarben, Lüsterfarben, Silikon- und Sol-Gel-basierten Farben, gesputterten Schichten, metallischen, Oxinitrid-, Oxicarbid-Schichten und so weiter entsprechend dem Stand der Technik einsetzbar und kombinierbar. Schichten können dabei auch übereinander aufgebracht werden.

Aufgrund der Farbneutralität können erfindungsgemäße Sichtscheiben auch zur Abdeckung einer oder mehrerer Anzeigen verwendet werden. Die Anzeigenvorrichtungen bestehen aus Licht emittierenden elektronischen Bauteilen, wie z. B. aus weißen oder farbigen Leuchtdioden, RGB-LED, OLED, LCD, Fluoreszenzanzeigen, Projektoren, Leuchtstoffröhren, Displays und Bildschirme. Es sind alle Formen von Anzeigen, punktuelle wie flächige, einschließlich 7-Segment-Anzeigen, möglich. Die Emissionsspektren der strahlenden Anzeigen können monochromatisch sein oder polychromatisch mehrere Maxima und breite Bereiche haben, so dass die Anzeigen farbig, wie z. B. violett, blau, purpur, rot, grün, gelb, orange, oder weiß erscheinen. Aufgrund der geringen Buntheit der Glaskeramik können schwarz-weiße und farbige Displays oder Bildschirme ohne störende Farbverfälschung betrachtet werden. Auf das Anbringen von auf der Innenseite aufgebrachten Farbfiltern oder Farbschichten wird bevorzugt verzichtet. Um die Sichtbarkeit der Anzeigen zu verbessern können diese mit Brechungsindex-angepassten Polymeren angeklebt werden oder Blenden angebracht werden. Antireflex-, Streu-, Diffusor- oder Antiglare-Schichten können im Bereich der Anzeige auf das Substrat aufgebracht werden, um die Sichtbarkeit der Anzeige zu verbessern.

Weiterhin können erfindungsgemäße Sichtscheiben auch gleichzeitig zur Abdeckung von Kontroll-, Sensor-, Steuerungs- und Bedienelementen verwendet werden. Neben der Anzeige von Betriebszuständen des Kamins wird es damit für den Nutzer möglich, den Kamin direkt an der Sichtscheibe zu bedienen. Die Steuerung kann über berührungsempfindliche Bildschirme erfolgen. Die Sichtscheibe kann Bereiche mit geringerer Dicke für die Anzeigen enthalten. Da die Transmission exponentiell von der Dicke des Substrats abhängt wird die Helligkeit der Anzeige, z. B. bei einem Bildschirm, stark erhöht. Die anderen Bereiche der Sichtscheibe sind dabei jedoch vorzugsweise dicker ausgebildet, damit sie über die erfindungsgemäße Lichttransmission verfügen.

Aufgrund der niedrigen elektrischen Leitfähigkeit der Glaskeramik können auch elektromagnetische Sender und Empfänger hinter der Sichtscheibe angebracht werden. Diese können beispielsweise dazu genutzt werden, um den Kamin per kabelloser Anbindung mit dem Internet oder einem mobilen elektronischen Gerät wie einem Mobiltelefon zu verbinden. Hierfür kommen beispielsweise WLAN-, Bluetooth- oder ZigBee-Anbindungen in Frage. Ebenso kann der Kamin über eine solche Anbindung mit einer Smart Home Heimsteuerungsanlage verbunden sein. Auf diese Weise können die Betriebsparameter anderer Hausanlagen wie beispielsweise die Heizung oder Belüftung an den Betrieb des Kamins angepasst werden. Außerdem kann der Betrieb des Kamins unter Berücksichtigung von in der Umgebung des Kamins verteilten Sensoren wie Temperatursensoren oder Brandmeldern gesteuert werden.

Ebenso ist es möglich, Sensoren im Innenraum des Kamins anzubringen, deren Messwerte kabellos an ein Steuerungssystem übertragen werden. Da ein Kamin ein metallisches Gehäuse aufweisen kann, dass für elektromagnetische Strahlung undurchlässig ist, ist eine entsprechend durchlässige Sichtscheibe für eine solche Anbindung besonders vorteilhaft.

Die erfindungsgemäßen Sichtscheiben sind beispielsweise für jede Befeuerungsart für Kamine geeignet. Dies umfasst insbesondere mittels Holzscheiten, Holzpellets, Gas, oder Flüssigbrennstoff befeuerte Kamine. Da die Sichtscheiben über eine ausgezeichnete thermische Beständigkeit verfügen sind sie auch für Kamine jeglicher Leistungs- bzw. Brennwertklasse geeignet.

Bei Kamin- oder Ofensichtscheiben können Beschichtungen, beispielsweise zur blickdichten Abdeckung am Rand der Scheiben, gewünscht sein. Solche Beschichtungen werden üblicherweise auf der Innenseite des Substrats aufgebracht. Dort dienen sie unter anderem dazu, Verklebungen des Substrates mit Rahmenkonstruktionen zu kaschieren.

Für die blickdichte Abdeckung am Rand kommen üblicherweise blickdichte Emaille-Schichten zum Einsatz. Eine Emaille ist eine Beschichtung, die durch Einbrennen eines Gemischs aus wenigstens einem Pigment und wenigstens einer Glasfritte hergestellt wird. Üblicherweise wird eine Emaille mittels Siebdruck oder anderen Druckverfahren aufgebracht. Bei besonders hohen Anforderungen an die Opazität kann die Emaille-Schicht auch durch mehrfaches Übereinanderdrucken besonders dick und lichtundurchlässig hergestellt werden. Eine Emaille-Schicht kann entweder auf einer Seite, vorzugsweise der Innenseite, oder auf beiden Seiten vorgesehen sein.

Für eine Verwendung auf einer Sichtscheibe muss die Emaille eine Vielzahl spezifischer Anforderungen erfüllen. Neben einer ausreichend hohen Opazität muss sie beständig gegenüber der Infiltration durch Flüssigkeiten sein, damit der Kleber vor dem Aushärten nicht in die Schicht eindringen und dadurch von der anderen Seite her sichtbare Klebestellen erzeugen kann. Sie muss stabil gegenüber den in einem Kamin auftretenden Temperaturen und Temperaturwechselbelastungen sein und eine hohe chemische Beständigkeit gegenüber Verbrennungsprodukten und Reinigungsmitteln besitzen.

Ein Vorteil bei der Verwendung einer erfindungsgemäßen Sichtscheibe in Kombination mit einer solchen blickdichten Emaille ist, dass durch die reduzierte Transmission des Substrats die Anforderungen an die Emaille geringer werden. Eine Emaille, die beispielsweise in Kombination mit einer nicht eingefärbten Sichtscheibe eine schwache Klebersichtbarkeit aufweist, ist für solche Sichtscheiben nicht geeignet. In Kombination mit einer erfindungsgemäßen Sichtscheibe kann sich aber die reduzierte Transmission der Sichtscheibe so auswirken, dass die Klebersichtbarkeit zusätzlich reduziert wird, sodass eine solche Emaille für eine Verwendung geeignet ist. Auf gleiche Weise werden auch die Anforderungen an die Opazität und den Farbort der Beschichtung weniger anspruchsvoll. Dadurch wird es möglich, auch kostengünstigere Emaille-Beschichtungen zu verwenden.

In einer bevorzugten Ausführungsform weist die Sichtscheibe auf einer Seite, vorzugsweise auf beiden Seiten, eine Entspiegelungsschicht auf. Unter einer Entspiegelungsschicht ist dabei eine Schicht oder ein Stapel aus mehreren Schichten zu verstehen, die die Gesamtreflexion des Substrats im sichtbaren Spektralbereich zwischen 380 nm und 780 nm reduziert. Der Brechungsindex von LAS-Glaskeramiken liegt im Sichtbaren ungefähr zwischen 1,5 und 1,6. Dies führt zu einer Reflexion von sichtbarem Licht in einer Größenordnung von ca. 4 % pro Seite des Substrats. Da beide Seiten des Substrats in gleicher Weise zur Reflexion beitragen, ist es vorteilhaft, wenn beide Seiten eine Entspiegelungsschicht aufweisen. Dieses reflektierte Licht reduziert die Sichtbarkeit des Flammbildes, insbesondere wenn der Kamin in einer hellen Umgebung betrieben wird. Durch eine Entspiegelungsschicht wird also die Sichtbarkeit des Flammbildes weiter verbessert.

Entspiegelungsschichten können aus einer Schicht bestehen, die einen Brechungsindex aufweist, der niedriger als der der Glaskeramik ist. Alternativ können Entspiegelungsschichten aus einem Stapel von Schichten bestehen, die alternierend aus einem Material mit niedrigem und einem Material mit hohem Brechungsindex besteht. Durch geeignete Wahl der Brechungsindizes und Schichtdicken können so interferenzoptische Schichten hergestellt werden, die die Gesamtreflexion reduzieren. Als Materialien kommen hierfür häufig $SiO_2$ als Material mit niedrigem Brechungsindex und $TiO_2$ als Material mit hohem Brechungsindex zum Einsatz.

In einer weiteren bevorzugten Ausführungsform weist die Scheibe eine infrarotreflektierende Beschichtung auf einer oder beiden Seiten auf. Unter einer infrarotreflektierenden Beschichtung ist dabei eine Schicht oder ein Stapel aus Schichten zu verstehen, die die Reflexion elektromagnetischer Strahlung mit einer Wellenlänge von mehr als 780 nm erhöht und die Reflexion von Licht im sichtbaren Bereich möglichst wenig ändert. Insbesondere soll durch eine solche Schicht die Reflexion für die von der Flamme ausgestrahlte Wärmestrahlung erhöht werden. Durch eine solche Schicht kann ein Teil der Wärmestrahlung in den Brennraum zurückreflektiert werden. Dies führt zu einer Erhöhung der Flammentemperatur und somit zu einer Erhöhung der Verbrennungseffizienz. Gleichzeitig führt es zu einer Reduktion der über die Sichtscheibe abgestrahlten Wärmestrahlung in den Außenraum. Dadurch kann eine Überhitzung des Außenraumes vermieden werden.

Die Zunahme der Flammtemperatur erhöht allerdings wie oben beschrieben den Anteil an IR-A-Strahlung in der Wärmestrahlung des Kamins. Deshalb ist ein weiterer positiver Aspekt der Erfindung, dass die beschriebenen Glaskeramiken IR-A-Strahlung gezielt absorbieren und dadurch die Betriebssicherheit des Kamins erhöhen. Dieser Effekt tritt für Sichtscheiben mit infrarotreflektierender Beschichtung besonders stark auf.

Vorzugsweise ist die infrarotreflektierende Beschichtung auf der Innenseite des Substrats angebracht. Dann tritt weniger Wärmestrahlung durch das Substrat hindurch. Folglich wird auch weniger Wärmestrahlung in dem Substrat absorbiert, so dass sich das Sichtfenster im Betrieb weniger erhitzt. Dadurch bleibt die Außenseite des Sichtfensters kühler und das Verletzungsrisiko durch Verbrennungen bei Berührung des Sichtfensters sinkt.

Geeignete Materialien für infrarotreflektierende Beschichtungen sind insbesondere transparente leitfähige Oxide (TCOs) wie Indium-Zinn-Oxid (ITO), Aluminium-dotiertes Zinkoxid (AZO), Antimon-dotiertes Zinnoxid (ATO), Indium-Gallium-Zinkoxid (IGZO) oder Fluor-dotiertes Zinnoxid (FTO). Diese Materialien weisen die nötige Temperaturbeständigkeit auf. Darüber hinaus können auch weitere Schichten zwischen dem Substrat und der infrarotreflektierenden Schicht vorgesehen sein. Solche Schichten können beispielsweise Barriereschichten gegen die Diffusion von Bestandteilen der Glaskeramik in die Beschichtung sein. Alternativ oder in Kombination können zusätzliche Schichten für eine Entspiegelung im sichtbaren Spektralbereich oder eine Anpassung des Farborts der Beschichtung vorliegen.

Sowohl bei Entspiegelungsschichten als auch bei infrarotreflektierenden Schichten handelt es sich in der Regel um interferenzoptisch aktive Schichten. Das bedeutet, dass diese Schichten farbig erscheinen, auch wenn sie kein Licht absorbieren. Bringt man eine solche Schicht auf der Innenseite einer transparenten nicht eingefärbten Glaskeramik an und zusätzlich im Randbereich eine blickdichte Beschichtung, so kann sich die Farbe der Schicht im Bereich der Emaille gegenüber den Bereichen ohne Emaille verändern. Dies ist unerwünscht, weil dadurch ein inhomogener Gesamteindruck der Sichtscheibe entsteht. Bei einem identischen Aufbau unter Verwendung einer erfindungsgemäßen Sichtscheibe dämpft die eingefärbte Glaskeramik diese Farbunterschiede durch ihre Absorption ab, sodass diese weniger oder sogar gar nicht mehr sichtbar sind.

Deshalb weist die Sichtscheibe in einer bevorzugten Ausführungsform zumindest auf der Innenseite wenigstens eine Entspiegelung oder infrarotreflektierende Beschichtung und eine blickdichte Beschichtung auf. Die blickdichte Beschichtung ist dabei vorzugsweise auf die Entspiegelung oder infrarotreflektierende Beschichtung aufgebracht.

In einer weiteren bevorzugten Ausführungsform weist die Sichtscheibe, vorzugsweise auf ihrer Außenseite, eine teilreflektierende Beschichtung auf. Unter einer teilreflektierenden Beschichtung ist dabei eine Beschichtung zu verstehen, die die Gesamtreflexion des Substrates im sichtbaren Spektralbereich erhöht und einen Lichttransmissionsgrad von wenigstens 10 %, vorzugsweise wenigstens 20 %, insbesondere wenigstens 45 % aufweist. Dies können beispielsweise dünne metallische Schichten, Schichten mit einer oxidischen Matrix und darin dispergierter Metallpartikel oder interferenzoptische Schichten aus Metalloxiden sein. Die Lichttransmissionsgrade von teilreflektierender Beschichtung und Substrat müssen dabei so aufeinander abgestimmt sein, dass der resultierende Lichttransmissionsgrad hoch genug ist, um eine gute Sichtbarkeit der Flamme zu gewährleisten. In der Regel wird der resultierende Lichttransmissionsgrad höher gewählt werden müssen, als bei einer Sichtscheibe ohne reflektierende Beschichtung, da die Flammensichtbarkeit aufgrund des reflektierten Umgebungslicht durch die Verwendung reflektierender Schichten in der Regel schlechter ist.

Sichtscheiben für Kaminöfen können in einer Vielzahl unterschiedlicher Abmessungen vorliegen. Die Fläche einer solchen Sichtscheibe variiert von ca. 0,01 $m^2$, beispielsweise kleine Seitenscheiben bis hin zu ca. 1,3 $m^2$ für große Sichtscheiben. Wegen der verbesserten Farbneutralität kann die erfindungsgemäße Sichtscheibe auch als Teil einer durchgehenden Tür oder Frontverkleidung eines Kamins ausgebildet sein und so als größere Arbeitsplatte bzw. Küchentisch mit Maßen oberhalb 1,3 $m^2$ und mit verbesserten interaktiven Funktionen vorliegen.

Die Sichtscheibe, insbesondere das Substrat, unterliegt in seiner Größe keinen bestimmten Beschränkungen und kann prinzipiell in jedem in der Glasindustrie üblichen Maß hergestellt werden. Neben den oben genannten Größen kann die Sichtscheibe in jeder GEN-Größe GEN 1 bis GEN 10.5 hergestellt werden:

|  | Länge [mm] | Breite [mm] |
|---|---|---|
| GEN 1 | 300 | 400 |
| GEN 2 | 370 | 470 |
| GEN 3 | 550 | 650 |
| GEN 3.5 | 600 | 720 |
| GEN 4 | 680 | 880 |
| GEN 4.5 | 730 | 920 |
| GEN 5 | 1100 | 1250-1300 |
| GEN 6 | 1500 | 1800--1850 |
| GEN 7 | 1870 | 2200 |
| GEN 7.5 | 1950 | 2250 |
| GEN 8 | 2160 | 2460 |
| GEN 10 | 2880 | 3130 |

(fortgesetzt)

| | Länge [mm] | Breite [mm] |
|---|---|---|
| GEN 10.5 | 2940 | 3370 |

Dabei beträgt die Scheibendicke üblicherweise entweder 4 mm oder 5 mm. Andere Scheibendicken beispielsweise im Bereich 2 mm bis 10 mm sind aber ebenfalls möglich. Die Scheibendicke wird beispielsweise je nach Scheibenfläche, Einbausituation oder Anwendung gewählt.

Sichtscheiben für Kaminöfen können in unterschiedlichen Geometrien hergestellt werden. Neben den flachen Formaten kommen auch winklig- bzw. rundverformte Scheiben zum Einsatz. Alle diese Geometrien können mit einer Bedruckung oder einer der genannten Beschichtungen versehen werden. Dazu werden in der Regel erst flache Scheiben hergestellt, dann die Beschichtung aufgebracht und anschließend die Scheibe verformt. Je nach Beschichtungsverfahren und Geometrie der Scheiben können die Scheiben auch erst verformt und dann beschichtet werden. Für die Verformung der Scheibe muss diese auf entsprechend hohe Temperaturen aufgeheizt werden. Dieses Aufheizen kann gleichzeitig dafür genutzt werden, um Beschichtungen wie Emaille-Schichten einzubrennen und/oder um die Scheibe zu keramisieren. Da durch die Keramisierung die Viskosität der Scheibe sprunghaft ansteigt, sollte die Umformung vor der Keramisierung erfolgen.

Mit den oben beschriebenen Glaskeramiken ist es möglich Sichtscheiben mit einer sehr hohen optischen Qualität und somit einer sehr guten Flammensichtbarkeit herzustellen.

In einer weiteren bevorzugten Ausführungsform ist das Substrat so optimiert, dass es eine möglichst geringe Streuung für sichtbares Licht verursacht. Hierzu zählt neben dem Kristallgefüge der Glaskeramik beispielsweise, dass das Substrat weniger als 3 Blasen pro kg Glaskeramik, bevorzugt weniger als 2 Blasen pro kg, besonders bevorzugt weniger als 1 Blase pro kg, bezogen auf eine Blasengröße von mindestens 100 $\mu$m im Durchmesser aufweist.

Darüber hinaus ist es vorteilhaft, wenn das Substrat aus Glaskeramik besteht, dass es eine möglichst niedrige intrinsische Lichtstreuung an den enthaltenen Kristalliten aufweist. Dies ist insbesondere dann der Fall, wenn die Kristallite eine durchschnittliche Größe von weniger als 250 nm im Durchmesser aufweisen und der Brechzahlunterschied zwischen kristalliner Phase und Restglasphase möglichst gering ist. Beide Parameter können durch die Wahl der Materialzusammensetzung und die Keramisierungsbedingungen, insbesondere die Steigung der Temperaturrampen, Dauer der Keramisierung und maximale Temperatur während der Keramisierung stark beeinflusst werden.

In einer bevorzugten Ausführungsform, weist das Substrat eine zur Erhöhung der Qualität des Flammbildes angepasste Oberflächenqualität auf. Beispielsweise kann die Außenseite oder beide Seiten poliert sein und somit eine sehr geringe Oberflächenrauheit aufweisen, wodurch in vorteilhafter Weise die Streuung des Flammbildes weiter reduziert werden kann. Auf diese Weise können für das Flammbild besonders hohe Kontrastwerte erzielt werden.

Durch geeignete Wahl der Zusammensetzung und der Herstellungsparameter der Glaskeramik, kann sich auch an den Oberflächen des Substrates, insbesondere an der Außen- und Innenseite eine glatte, glasige Oberflächenschicht ausbilden. Unter glasiger Oberflächenschicht einer LAS-Glaskeramik wird eine Schicht direkt an der Oberfläche verstanden, die im Gegensatz zum Inneren, d.h. dem Gefüge unterhalb dieser Randschicht, nicht die typischerweise im Mittel 20nm bis 100nm großen Kristalle aufweist, sondern überwiegend amorph ist. Eine solche Oberflächenschicht kann vorzugsweise so glatt sein, dass ein nachgelagertes polieren nicht notwendig ist. Glasige Oberflächenschichten weisen außerdem im Vergleich zum Volumen der Glaskeramik eine Verarmung an Lithium und üblicherweise eine Dicke von weniger als 5 $\mu$m, vorzugsweise im Bereich von ca. 50 bis 1.500 nm, auf.

Die glasige Oberflächenschicht kann auch einen geringeren Brechungsindex als das kristalline Innere aufweist. Auf diese Weise kann der glasige Randbereich auch entspiegelnd wirken, so dass auf das zusätzliche Aufbringen einer Entspiegelungsschicht verzichtet werden kann. Dadurch wird eine deutliche Reduzierung der Kosten durch Material- und Zeitersparnis möglich. Die Ausbildung des glasigen Randbereichs kann dabei besonders vorteilhaft die Transparenz der Sichtscheibe um ca. 1% absolut im sichtbaren Wellenlängenbereich erhöhen.

Alle Ausführungen gelten sowohl für polierte wie auch nicht polierte Glaskeramiken, auch wenn bekannt ist, dass Oberflächenbehandlungen wie eine Politur zu Unterschieden in der Lichtreflexion führen können.

Erfindungsgemäße Sichtscheiben, die für Kamine geeignet sind, sind ebenfalls zur Verwendung als Backofensichtscheibe oder als Sichtscheibe in Grillgeräten geeignet. Für Backöfen und Grillgeräte gelten dabei im Wesentlichen die gleichen oder zumindest sehr ähnliche Anforderungen wie für Kamine. Das beleuchtete Gargut entspricht dabei der Sichtbarkeit der Flamme im Kamin. Die Farbneutralität der Glaskeramik ermöglicht die Beurteilung des Garzustandes des Garguts ohne Öffnen des Garraumes und somit ohne Energieverlust. Dies ist besonders deshalb wichtig, weil der Garzustand beim Backen und Grillen häufig über die Farbe, beispielsweise den Bräunungsgrad des Garguts, bestimmt wird.

Die Temperaturbeständigkeit der Sichtscheibe ist für Backöfen, insbesondere solche mit Pyrolyse-Reinigungsfunktion und für Grillgeräte genau so bedeutsam wie für Kaminsichtscheiben. Bei Backöfen sind die Sichtscheiben vorzugsweise in der Tür angeordnet.

Die Sichtscheiben sind für jede Art von Grillgerät geeignet. Besonders bevorzugt werden sie für Gasgrillgeräte verwendet. In Grillgeräten werden die Sichtscheiben vorzugsweise im Deckel des Grillgeräts angeordnet.

Für Backöfen und Grillgeräte liegt die bevorzugte Dicke der Sichtscheibe zwischen 2 und 8 mm.

Die vorliegende Erfindung wird anhand der folgenden Beispiele weiter verdeutlicht.

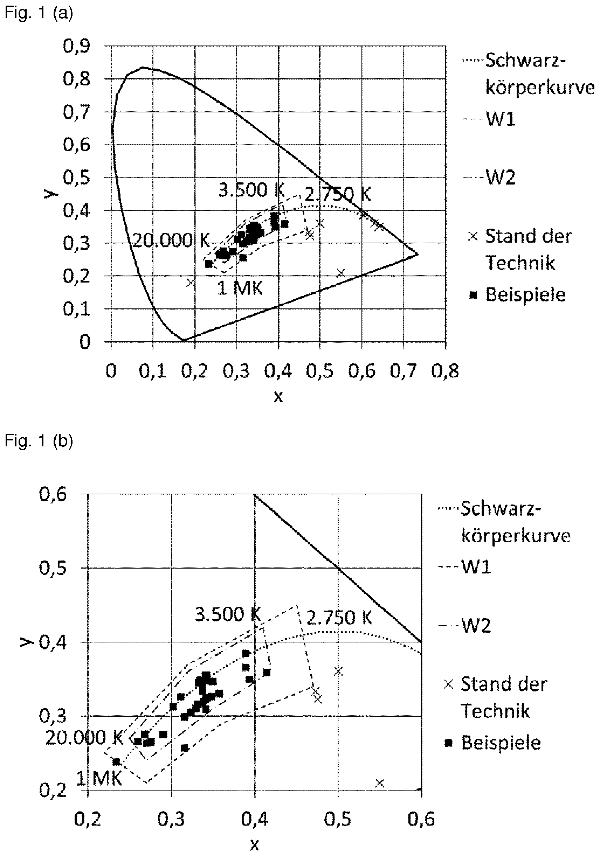

Die Figuren 1(a) und (b) zeigen Chromatizitätsdiagramme des Farbraums CIExyY mit 2° Normalbeobachter (CIExyY-2°). In der Fig. 1(a) sind die Schwarzkörperkurve als gepunktete Linie, die beiden Weißbereiche W1 und W2 als gestrichelte Linien, die Farbkoordinaten der erfindungsgemäßen Beispiele als schwarze Quadrate und Beispiele aus dem Stand der Technik als schwarze Kreuze abgebildet. Die dargestellten Beispiele aus dem Stand der Technik entsprechen den aus der WO 2012076414 A1 bekannten Glaskeramiktypen sowie kommerziell erhältlichen Glaskeramiken der Firmen SCHOTT AG und Eurokera. Die Beispiele aus dem Stand der Technik liegen alle außerhalb des Weißbereichs W1. Alle dargestellten Farborte beziehen sich auf eine Materialstärke von 4 mm. Die Fig. 1(b) zeigt einen vergrößerten Ausschnitt der Fig. 1(a).

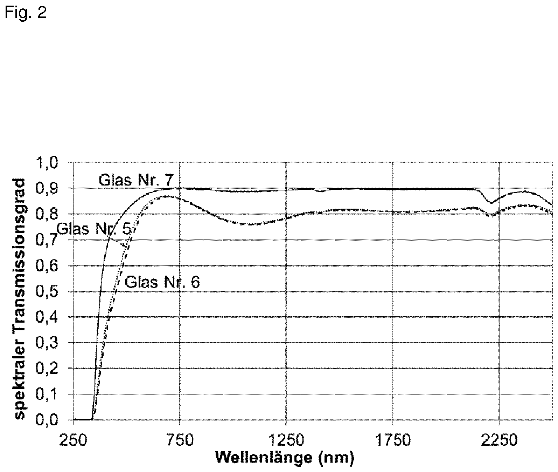

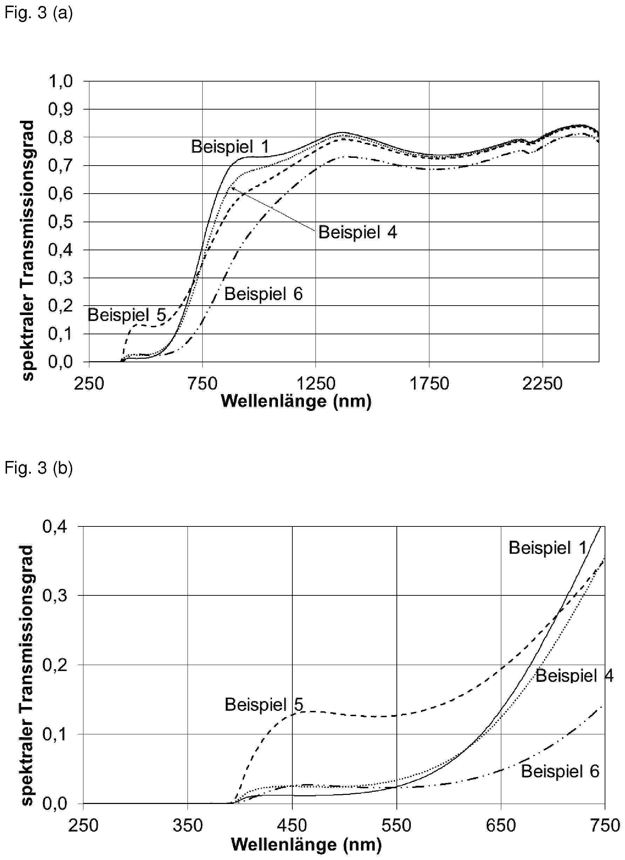

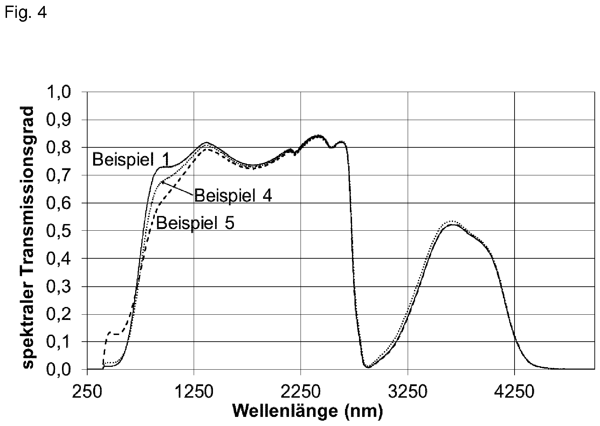

In den Abbildungen Figur 2 bis 5 sind die Transmissionskurven für einige aufgeführten kristallisierbaren Gläser und die Glaskeramik-Beispiele mit 4 mm Dicke in verschiedenen Wellenlängenbereichen dargestellt.

Die kristallisierbaren Gläser 1 bis 35 wurden aus in der Glasindustrie üblichen technischen Gemengerohstoffen bei Temperaturen von 1620 °C, 4 Stunden eingeschmolzen. Mit dieser Wahl lassen sich die Forderungen nach wirtschaftlichen Rohstoffen und einem geringen Verunreinigungsgehalt an unerwünschten Verunreinigungen vereinbaren. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1600 °C, 60 Minuten durch Rühren homogenisiert. Nach dieser Homogenisierung wurden die Gläser für 2 Stunden bei 1640 °C geläutert. Anschließend wurden Stücke von ca. 120 x 140 x 30 mm$^3$ Größe gegossen und in einem Kühlofen beginnend ab 640 °C auf Raumtemperatur abgekühlt, um Spannungen abzubauen. Die Gussstücke wurden in die für die Untersuchungen und für die Keramisierung benötigten Größen unterteilt.

Die Verunreinigungen durch typische Spurenelemente bei den verwendeten technischen Rohstoffen liegen bei 200 ppm $B_2O_3$, 30 ppm Cl, 1 ppm CoO, 3 ppm $Cr_2O_3$, 200 ppm $CS_2O$, 3 ppm CuO, 200 ppm F, 400 ppm $HfO_2$, 3 ppm NiO, 500 ppm Rb20, 5 ppm $V_2O_5$.

Tabelle 1 zeigt eine Grundzusammensetzung für kristallisierbare Gläser und ihre Eigenschaften. Die Grundzusammensetzung Basisglas 1 entspricht dem Vergleichsglas 1 nach dem Stand der Technik mit dem keine erfindungsgemäßen Sichtscheiben hergestellt werden können. In Tabelle 1 sind auch die Eigenschaften im glasigen Zustand Transformationstemperatur Tg [°C], Verarbeitungstemperatur VA [°C], $10^2$-Temperatur [°C] und obere Entglasungsgrenze OEG [°C] aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG. Die Glaseigenschaften des Basisglases werden durch geringe Zudotierungen färbender Verbindungen wenig verändert.

Den Gemengerohstoffen dieser Grundzusammensetzung werden unterschiedliche Gehalte färbender Verbindungen zugesetzt und neue Gläser geschmolzen. Durch Zusatz der Komponente $MoO_3$ werden erfindungsgemäße Zusammensetzungen erhalten. Die so erhaltenen Gläser in Tabelle 2 haben die Grundzusammensetzung von Glas 1 und unterscheiden sich nur in den angegebenen färbenden Verbindungen und optional reduzierenden Zusätzen. Sie werden mit den in der Tabelle 2 aufgeführten Keramisierungsprogrammen kristallisiert. Die Transmissions-Eigenschaften und Streuung der erhaltenen Glaskeramiken sind aufgeführt. Auch die mit Röntgenbeugung gemessene Hauptkristallphase ist aufgeführt. Für einige Beispiele wurde auch die thermische Ausdehnung zwischen 20 °C und 300 bzw. 700 °C gemessen.

Dabei handelt es sich bei den Beispielen 1 und 2 um Vergleichsbeispiele aus dem Stand der Technik (WO 2010102859 A1), mit einem $V_2O_5$-Gehalt von 0,023 Gew.-%, die aus dem Vergleichsglas 1 mit unterschiedlichen Programmen keramisiert wurden. Die erfindungsgemäßen Beispiel 3 und 4 enthalten weniger als 0,015 Gew.-% $V_2O_5$. Im Vergleich zu den $V_2O_5$ freien Beispielen verschieben diese Licht der Normlichtart D65 stärker in Richtung rot, nämlich zu x-Koordinaten >0,4. Im Gegensatz zu den Vergleichsbeispielen 1 und 2 liegt der Wert aber noch im Bereich x < 0,5. Licht das durch die Glaskeramiken der Beispiele 3 und 4 bei einer Dicke von 4 mm transmittiert wird, liegt im Weißbereich W1, aber aufgrund des $V_2O_5$-Gehalts nicht innerhalb des Weißbereichs W2. Die Beispiele 3 und 4 sind die einzigen erfindungsgemäßen Beispiele, die nicht auch innerhalb des besonders bevorzugten Weißbereichs W2 liegen.

Die weiteren Vergleichsbeispiele 16 und 26 enthalten mehr als 0,01 Gew.-% $Cr_2O_3$. Durch solche Glaskeramiken transmittiertes Licht der Normlichtart D65 liegt nicht mehr innerhalb des Weißbereichs W1.

Bei kristallisierbaren Ausgangsgläsern gleicher Oxidzusammensetzung ist der Einfluss unterschiedlicher Keramisierungen und des Zusatzes von reduzierenden Verbindungen sowie von Scherben zum Gemenge auf die Transmission zu erkennen. Bei Zugabe von Zucker wird dieser ohne messbare Rückstande oxidiert, beeinflusst jedoch den Redox-Zustand des Glases. Bei Glas 29 wird 0,07 Gew.-% S als ZnS dem Gemenge zugesetzt. Im Glas liegt die analysierte Konzentration S < 10 ppm unter der Nachweisgrenze. Sowohl die Zucker- als auch die S-Zugabe führt zu einer starken Verstärkung der Färbung durch Mo.

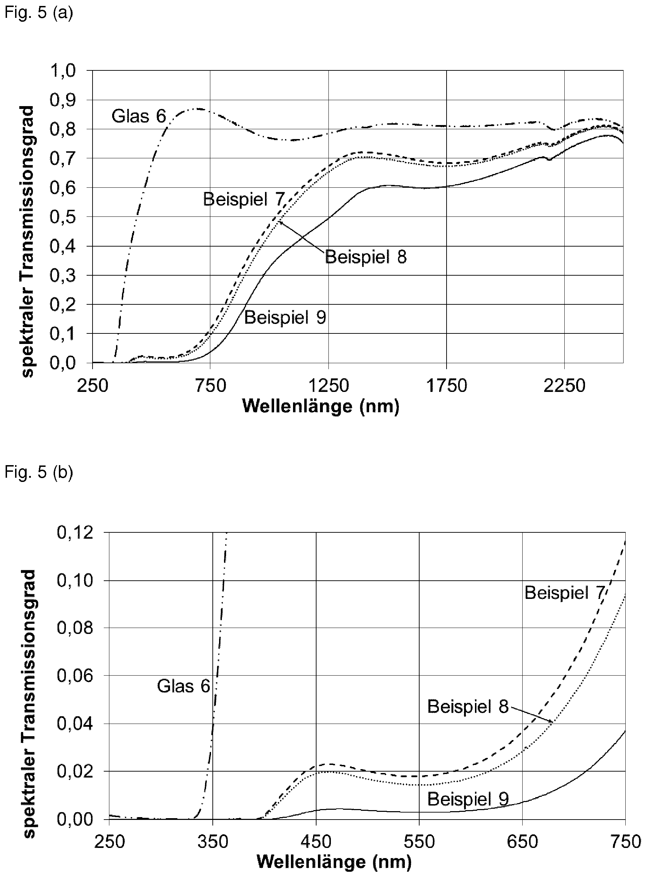

In Fig. 5 ist dargestellt wie aus dem kristallisierbaren Glas 6 durch unterschiedliche Keramisierungen verschiedene Transmissionsspektren erhalten werden. Dieser Abbildung sowie Fig. 2 ist auch zu entnehmen, dass die Einfärbung mit Mo erst mit der Keramisierung einsetzt.

Bei den Glaskeramiken von Tabelle 2 mit Hochquarz-Mischkristallen als Hauptkristallphase wird die thermische Ausdehnung durch die Zudotierungen färbender Verbindungen wenig verändert. Für ausgewählte Beispiele wurde die thermische Ausdehnung zwischen 20 und 300 °C, sowie 20 und 700 °C gemessen und liegt jeweils in einem Bereich von weniger als $\Delta = \pm 0,07 \cdot 10^{-6}$/K um die Mittelwerte -0,27 und 0,13 $\cdot 10^{-6}$/K. Die Werte der nicht gemessenen Beispiele werden auch in diesem Bereich angenommen.

Tabelle 3 zeigt die Zusammensetzungen weiterer kristallisierbarer Gläser und ausgewählte Eigenschaften. Dabei entspricht das Vergleichsglas 22 mit seiner Zusammensetzung der Glaskeramik KeraVision® der Firma EuroKera. Das mit Fe, V, Mn und Co dotierte Glas erreicht nach Umwandlung in die Vergleichsglaskeramik 29 (Tabelle 4) nicht die erfindungsgemäße geringe Farbe, insbesondere liegt durch eine solche Glaskeramik transmittiertes Licht nicht mehr innerhalb des Weißbereichs W1. Beispiele 30 und 38 verfügen über eine höheren $TiO_2$-Gehalt und zeigen eine Verstärkung der Einfärbung mit Molybdänoxid. Die Beispiele 31 und 32, hergestellt aus den kristallisierbaren Gläsern 23 und 24 sind nicht mit $SnO_2$ sondern mit $As_2O_3$ geläutert. Es zeigen sich die beschriebenen Nachteile des schwächeren Redoxpartners As. Gegenüber Sn ist die Einfärbung mit $MoO_3$ deutlich geringer und auch der Zusatz von reduzierenden Verbindungen kann die Helligkeit anders als bei SnO2-geläuterten Glaskeramiken nicht signifikant verringern.

Bei dem Keramisierungsprogramm 1 wird bis zu einer Temperatur von 600 °C im Keramisierungsofen in 20 min aufgeheizt. Es wird weiter aufgeheizt. Die Gesamtzeit ab Raumtemperatur bis 680 °C beträgt 23 min. Der Temperaturbereich von 680 °C bis 800 °C ist für die Keimbildung wichtig. Daher wird weiter aufgeheizt. Die Gesamtzeit zwischen 680 °C bis 800 °C beträgt 19 min. Oberhalb von ca. 800 °C erfolgt die Kristallisation der gewünschten Hochquarz-Mischkristallphase. Die Gesamtzeit von 800°C bis Erreichen der Maximaltemperatur 918°C beträgt 24 min (Heizrate 5°C/min). Bei der Maximaltemperatur von 918 °C, Haltezeit 10 min, wird die Zusammensetzung von Kristallen und Restglas eingestellt und die Mikrostruktur homogenisiert. Dabei werden die chemischen und physikalischen Eigenschaften der Glaskeramik eingestellt. Das Abkühlen erfolgt bis 800°C gesteuert (Kühlrate 6°C/min), dann wird die Probe auf Raumtemperatur durch Öffnen der Ofentür abgeschreckt; also zusammengefasst:
Keramisierungsprogramm 1 (Keramisierungszeit 96 min):

a) Aufheizen innerhalb von 23 Minuten von Raumtemperatur auf 680°C;
b) Temperaturerhöhung von 680 auf 800°C innerhalb von 19 min, dabei Aufheizen mit 10°C/min auf 730°C, weiteres Aufheizen mit 5°C/min auf 800°C;
c) Temperaturerhöhung von 800°C auf 918°C innerhalb von 24 min und Haltezeit 10 min bei Maximaltemperatur
d) Abkühlen auf 800°C innerhalb 20 min, dann schnelle Abkühlung auf Raumtemperatur.

Bei dem Keramisierungsprogramm 2 ist die Keramisierungszeit verkürzt.

Keramisierungsprogramm 2 (Keramisierungszeit 68 min):

a) schnelles Aufheizen von Raumtemperatur auf 740 °C in 26 min,
b) Temperaturerhöhung von 740 bis 825 °C in 18 min (Heizrate 4,7 °C/min),
c) Temperaturerhöhung von 825 °C bis 930 °C in 4 min (Heizrate 26 °C/min), Haltezeit von 4 min bei Maximaltemperatur,
d) Abkühlen auf 800°C innerhalb 16 min, dann schnelle Abkühlung auf Raumtemperatur.

Mit einem zusätzlichen Keramisierungsprogramm 3 erfolgte die Umwandlung in Glaskeramiken mit Keatit-Mischkristallen als Hauptkristallphase. Bei diesem Programm wurde bis 800 °C wie bei Programm 1 verfahren, Dann wurde abweichend von Programm 1 mit einer Heizrate von 5 °C/min auf eine Maximaltemperatur 960 °C mit Haltezeit 10 min erhitzt. Von der Maximaltemperatur wurde mit 6 °C/min auf 800 °C abgekühlt und dann schnell auf Raumtemperatur abgekühlt.

Die mit dem Keramisierungsprogramm 3 hergestellten Glaskeramiken Beispiele 9 und 11 enthalten mit Röntgenbeugung gemessen 79% Keatit-Mischkristalle als Hauptkristallphase. Zugleich sind die Kristallitgrößen mit ca. 120 nm vergrößert, so dass bei der Verwendung von Anzeigeelementen unterhalb der Glaskeramik störende Streuung auftritt. Die anderen mit den Keramisierungsprogrammen 1 und 2 hergestellten Glaskeramiken enthalten Hochquarz-Mischkristalle mit in der Regel mehr als 90% des Gesamtkristallphasenanteils. Weitere Kristallphasen sind die Keimbildnerphasen $ZrTiO_4$. Zugleich sind die Kristallitgrößen mit weniger als 70 nm so klein, dass bei der Verwendung von Anzeigeelementen unterhalb der Glaskeramik keine störende Streuung auftritt.

Die thermische Ausdehnung der Glaskeramiken mit Hochquarz-Mischkristall als Hauptkristallphase liegt bei 0

$\pm$ 0,5 $\times$ 10$^{-6}$/K im Bereich von 20-700°C, entspricht also den Anforderungen für temperaturstabile Glaskeramiken. Beispielsweise beträgt die thermische Ausdehnung für die Grundzusammensetzung des Beispiels 1 0,13 x 10$^{-6}$ /K und für Beispiel 36 0,34 x 10$^{-6}$ /K im Bereich von 20-700°C. Für Beispiel 11 liegt der CTE bei 0,7 x 10$^{-6}$ /K im Bereich von 20-700°C.

Die Transmissionsmessungen wurden an polierten Platten mit dem Gerät Perkin-Elmer Lambda 900 durchgeführt. Die Transmission wurde an Proben mit einer Dicke von 3,5 bis 4,1 mm bestimmt und auf eine Dicke von 4 mm umgerechnet. Spektrale Transmissionsgrade sind für ausgewählte Wellenlängen angegeben. Aus den gemessenen spektralen Werten im Bereich zwischen 380 nm und 780 nm, der das sichtbare Lichtspektrum repräsentiert, werden die Helligkeit L* und die Farbkoordinaten a*, b* im CIELAB-Farbsystem und die Helligkeit (brightness) Y sowie Farbkoordinaten x, y nach DIN 5033 im CIE-Farbsystem für die gewählte Normlichtart und Beobachterwinkel 2° berechnet. Die Buntheit c* und der Farbabstand d von den Farbkoordinaten von Licht der Normlichtart D65 x = 0,3127 und y = 0,3290 ist angegeben. Dieser wurde wie folgt berechnet:

$$d = \sqrt{(x - 0{,}3127)^2 + (y - 0{,}3290)^2}.$$

Für einige Proben wurden die Farbkoordinaten im CIELAB-Farbsystem in Remission gemessen. Hierfür wurde das Spektralphotometer CM-700d der Firma Konica Minolta, unter Verwendung der Normlichtart D65, einem 10° Standard-Beobachter der Farbort in Remission gemessen. Als Schwarzfalle wurde die Schwarz-Glaskachel CM-A511 von Konica Minolta verwendet. Die Bezeichnung Messung gegen eine Schwarzfalle bedeutet in diesem Sinne, dass die zu messende Probe zwischen dem Messgerät und einer Schwarzfalle angeordnet ist. Die Werte sind für 4 mm dicke polierte Proben angegeben. Die Farbkoordinaten der Proben entsprechen einem farbneutralen Schwarzton.

Aus dem Verlauf der Transmissionskurve im Bereich von 470 bis 630 nm wurde die Flachheit der Kurve berechnet (Quotient aus höchstem zu niedrigstem Transmissionswert in diesem Bereich). Die Wellenlängen für den maximalen und minimalen Transmissionswert sind ebenfalls angegeben. Die Werte sind für 4 mm dicke polierte Proben angegeben.

Die Streuung der Glaskeramiken wird durch Messung der Trübung (engl. Haze) bestimmt. Dabei werden beidseitig polierte 3,5-4,1 mm dicke Proben mit einem kommerziellen Messgerät "Haze-guard plus" der Firma BYK Gardener (Norm ASTM D1003-13) mit Normlicht C gemessen. Die Streuung wird durch den Haze-Wert in den Tabellen charakterisiert.

Ergänzend wird an den Proben eine visuelle Begutachtung mit einer handelsüblichen weißen LED vom Typ 7-Segmentanzeige (Hersteller opto devices, Typ OS39D3BWWA) vorgenommen. Die polierten Glaskeramikproben wurden mit einem Abstand von 1 mm auf die weiße LED gelegt und von oben mit einem Abstand von 31 cm im gesamten Winkelbereich, d. h. senkrecht bis streifend zur Glaskeramikoberfläche betrachtet. Abhängig von der Helligkeit der Glaskeramikprobe wird die Leuchtdichte der weißen LED in diesem Abstand senkrecht zur Glaskeramikplatte auf 60 cd/m$^2$ geregelt, bzw. bei sehr dunklen Glaskeramikproben Y < 0,5 % mit maximaler Leistung betrieben. Um den Einfluss von Fremdlicht auszuschließen, wird die Bewertung in einer Dunkelkammer mit geringer Umgebungsbeleuchtung von ca. 4 lux vorgenommen.

Dabei bedeuten die visuellen Bewertungen in den Tabellen (1=keine Streuung wahrnehmbar, 2=geringe, aber tolerierbare Streuung, 3=sichtbare Streuung, erfordert zusätzlichen Aufwand für die Gestaltung des Kochfeldes, 4=deutliche störende Streuung, nicht tolerierbar). Bewertungen ab Stufe 4 sind nicht zulässig und solche ab Stufe 3 bevorzugt zu vermeiden. Bis auf die Beispiele 9 und 11 mit Keatit-Mischkristall (KMK) als Hauptkristallphase sind die Beispiele ohne sichtbare Streuung.

Bis auf die als Vergleichsbeispiele genannten, sind alle beispielhaft aufgeführten Glaskeramiken für die Verwendung in den erfindungsgemäßen Sichtscheiben geeignet Sie erfüllen insbesondere alle Anforderungen für die Verwendung in Kaminen, Backöfen und Grillgeräten.

Tabelle 1: Zusammensetzung und Eigenschaften des kristallisierbaren Basisglases 1 mit Grundzusammensetzung.

| Glas Nr. | | 1 |
|---|---|---|
| Zusammensetzung | Gew.% | |
| Li$_2$O | | 3,80 |
| Na$_2$O | | 0,60 |
| K$_2$O | | 0,25 |
| MgO | | 0,29 |

(fortgesetzt)

| Glas Nr. | | 1 |
|---|---|---|
| **Zusammensetzung** | Gew.% | |
| CaO | | 0,40 |
| SrO | | 0,02 |
| BaO | | 2,23 |
| ZnO | | 1,53 |
| $Al_2O_3$ | | 20,9 |
| $SiO_2$ | | 65,0 |
| $TiO_2$ | | 3,10 |
| $ZrO_2$ | | 1,38 |
| $P_2O_5$ | | 0,09 |
| $SnO_2$ | | 0,25 |
| $As_2O_3$ | | |
| $Fe_2O_3$ | | 0,090 |
| $V_2O_5$ | | 0,023 |
| $MoO_3$ | | |
| $MnO_2$ | | 0,025 |
| $Cr_2O_3$ | | |
| $CeO_2$ | | |
| $WO_3$ | | |
| $H_2O$ - Gehalt (β-OH) | $mm^{-1}$ | 0,39 |
| **Eigenschaften glasig** | | |
| Transformationstemperatur Tg | °C | 662 |
| $10^2$ - Temperatur | °C | 1742 |
| Verarbeitungstemperatur $V_A$ | °C | 1306 |
| OEG-Temperatur | °C | 1260 |

Tabelle 2: Dotierungen und Eigenschaften der für erfindungsgemäße Sichtscheiben geeigneten Glaskeramiken und Vergleichsglaskeramiken 1 und 2

| Beispiel Nr. | | 1 | 2 | 3 | 4 | 5 | 6 |
|---|---|---|---|---|---|---|---|
| Glas Nr. | | 1 | 1 | 2 | 3 | 4 | 5 |
| Basisglas | | 1 | 1 | 1 | 1 | 1 | 1 |
| **Dotierungen (Gew.-%)** | | | | | | | |
| $Fe_2O_3$ | | 0,090 | 0,090 | 0,120 | 0,088 | 0,088 | 0,088 |
| $V_2O_5$ | | 0,023 | 0,023 | 0,010 | 0,013 | | |
| $MoO_3$ | | | | 0,057 | 0,046 | 0,078 | 0,170 |
| $MnO_2$ | | 0,025 | 0,025 | 0,025 | 0,025 | 0,025 | 0,025 |
| $Cr_2O_3$ | | | | | | | |
| $CeO_2$ | | | | | | | |
| $WO_3$ | | | | | | | |
| Zusatz Gemenge | | | | | | | |
| **Keramisierungs-programm** | # | 1 | 2 | 1 | 1 | 1 | 1 |
| **Eigenschaften keramisiert** | | | | | | | |
| **Transmission 4 mm Dicke** | | | | | | | |
| 470 nm | % | 1,2 | 0,7 | 2,9 | 2,4 | 13,3 | 2,7 |
| 630 nm | % | 9,9 | 6,6 | 12,6 | 9,5 | 17,2 | 3,9 |
| 950 nm | % | 73,0 | 71,9 | 66,5 | 67,7 | 60,8 | 45,0 |
| 1600 nm | % | 76,4 | 76,3 | 70,9 | 75,7 | 74,8 | 70,3 |
| 3700 nm | % | 52,0 | 51,1 | 50,0 | 53,2 | 52,2 | 50,4 |
| **Farbkoordinaten (CIE) in Transmission 4mm Dicke, D65** | | | | | | | |
| x | | 0,502 | 0,517 | 0,447 | 0,436 | 0,337 | 0,348 |
| y | | 0,367 | 0,358 | 0,365 | 0,351 | 0,334 | 0,327 |
| Helligkeit Y | % | 3,6 | 2,2 | 5,8 | 4,4 | 13,6 | 2,6 |
| Farbabstand d | | 0,193 | 0,207 | 0,139 | 0,125 | 0,025 | 0,035 |
| **Farbkoordinaten (CIELAB) in Remission** | | | | | | | |
| L* | | 25,19 | 24,99 | 25,74 | | 26,52 | |
| a* | | 0,28 | 0,04 | 0,39 | | 0,16 | |
| b* | | -0,66 | -0,78 | 0,80 | | -0,80 | |
| c* | | 0,72 | 0,78 | 0,89 | | 0,82 | |
| **Flachheit Transmission** (Wellenlänge bei Max./Min.) | nm | 8,4 630 /470 | 10,0 630 /470 | 4,4 630 /470 | 4,0 630 /470 | 1,4 630 /529 | 1,7 630 /538 |
| Visuelle Bewertung | | 1 | 1 | 1 | 1 | 1 | 1 |
| Haze | % | 0,8 | 0,5 | 1,5 | 1,5 | 1,5 | 1,1 |
| **Thermische Ausdehnung ($10^{-6}$/K)** | | | | | | | |
| $\alpha_{20/300}$ | | -0,26 | -0,29 | | | | |
| $\alpha_{20/700}$ | | 0,13 | 0,17 | | | | |
| **Röntgenbeugung** | | | | | | | |
| Hauptkristallphase | | HQMK | HQMK | HQMK | HQMK | HQMK | HQMK |

22

Tabelle 2 (Fortsetzung): Dotierungen und Eigenschaften der Glaskeramiken

| Beispiel Nr. | 7 | 8 |
|---|---|---|
| **Glas Nr.** | **6** | **6** |
| **Basisglas** | **1** | **1** |
| **Dotierungen (Gew.-%)** | | |
| $Fe_2O_3$ | 0,088 | 0,088 |
| $V_2O_5$ | | |
| $MoO_3$ | 0,170 | 0,170 |
| $MnO_2$ | 0,025 | 0,025 |
| $Cr_2O_3$ | | |
| $CeO_2$ | | |
| $WO_3$ | | |
| Zusatz Gemenge | 50% Scherben | 50% Scherben |
| **Keramisierungs-programm** | 1 | 2 |
| **Eigenschaften keramisiert** | | |
| **Transmission 4 mm Dicke** | | |
| 470 nm | 2,3 | 2,0 |
| 630 nm | 3,9 | 2,3 |
| 950 nm | 41,5 | 35,3 |
| 1600 nm | 69,8 | 68,5 |
| 3700 nm | 51,8 | 52,0 |
| **Farbkoordinaten (CIE) in Transmission 4mm Dicke, D65** | | |
| x | 0,338 | 0,329 |
| y | 0,318 | 0,311 |
| Helligkeit Y | 2,0 | 1,6 |
| Farbabstand d | 0,028 | 0,024 |
| **Farbkoordinaten (CIELAB) in Transmission** | | |
| L* | 15,7 | 13,4 |
| a* | 5,2 | 4,5 |
| b* | 0,1 | -1,1 |
| c* | 5,2 | 4,7 |
| **Flachheit Transmission** (Wellenlänge bei Max./Min.) | 2,2 630/545 | 1,6 630/552 |
| **Streuung bei 4 mm Dicke°** | | |
| Visuelle Bewertung | 1 | 1 |
| Haze | 0,4 | 2,3 |
| **Thermische Ausdehnung** | | |
| $\alpha_{20/300}$ | | |
| $\alpha_{20/700}$ | | |
| **Röntgenbeugung** | | |
| Hauptkristall-phase | HQMK | HQMK |

## Tabelle 2 (Fortsetzung): Dotierungen und Eigenschaften der Glaskeramiken

| Beispiel Nr. | | 9 | 10 | 11 | 12 | 13 | 14 |
|---|---|---|---|---|---|---|---|
| **Glas Nr.** | | 6 | 7 | 8 | 9 | 10 | 11 |
| **Basisglas** | | 1 | 1 | 1 | 1 | 1 | 1 |
| **Dotierungen (Gew.-%)** | | | | | | | |
| $Fe_2O_3$ | | 0,088 | 0,017 | 0,086 | 0,090 | 0,084 | 0,062 |
| $V_2O_5$ | | | | | | | |
| $MoO_3$ | | 0,170 | 0,170 | 0,013 | 0,057 | 0,150 | 0,150 |
| $MnO_2$ | | 0,025 | | 0,025 | 0,025 | 0,025 | 0,025 |
| $Cr_2O_3$ | | | | | | | |
| $CeO_2$ | | | | | | | |
| $WO_3$ | | | | | | | |
| Zusatz Gemenge | | 50% Scherben | | | | 0,1% Zucker ohne Nitrat | |
| **Keramisierungs-programm** | # | 3 | 1 | 3 | 1 | 1 | 1 |
| **Eigenschaften keramisiert** | | | | | | | |
| **Transmission 4 mm Dicke** | | | | | | | |
| 470 nm | % | 0,4 | 0,8 | 33,5 | 16,7 | 0,12 | 1,2 |
| 630 nm | % | 0,5 | 0,6 | 43,7 | 21,7 | 0,07 | 1,9 |
| 950 nm | % | 27,0 | 28,9 | 73,0 | 62,1 | 11,2 | 36,7 |
| 1600 nm | % | 60,1 | 75,3 | 76,3 | 75,1 | 56,9 | 71,5 |
| 3700 nm | % | 56,2 | 48,5 | 56,1 | 51,0 | 48,7 | 52,4 |
| **Farbkoordinaten (CIE) in Transmission 4mm Dicke, D65** | | | | | | | |
| x | | 0,341 | 0,290 | 0,3401 | 0,337 | 0,271 | 0,323 |
| y | | 0,322 | 0,275 | 0,3553 | 0,339 | 0,264 | 0,305 |
| Helligkeit Y | % | 0,3 | 0,5 | 38,2 | 17,6 | 0,1 | 1,4 |
| Farbabstand d | | 0,029 | 0,059 | 0,038 | 0,026 | 0,077 | 0,026 |
| **Farbkoordinaten (CIELAB) in Remission** | | | | | | | |
| L* | | | | | 25,66 | | |
| a* | | | | | 0,15 | | |
| b* | | | | | -0,9 | | |
| c* | | | | | 0,91 | | |
| **Flachheit Transmission** (Wellenlänge bei Max./Min.) | nm | 1,8 630/552 | 1,9 630/567 | 1,3 630/470 | 1,3 630/524 | 2,4 470/580 | 1,6 630/553 |
| **Streuung bei 4 mm Dicke** | | | | | | | |
| Visuelle Bewertung | | 3 | 1 | 3 | 1 | 1 | 1 |
| Haze | % | 9,2 | 0,8 | 10,7 | 1,3 | 2,6 | 0,5 |
| **Thermische Ausdehnung** | | | | | | | |
| $\alpha_{20/300}$ | $10^{-6}$/K | 0,56 | | | -0,24 | | |
| $\alpha_{20/700}$ | $10^{-6}$/K | | | 0,70 | 0,16 | | |
| **Röntgenbeugung** | | | | | | | |
| Hauptkristallphase | | KMK | HQMK | KMK | HQMK | HQMK | HQMK |

Tabelle 2 (Fortsetzung): Dotierungen und Eigenschaften der Glaskeramiken und Vergleichsglaskeramik 16.

| Beispiel Nr. | | 15 | 16 | 17 | 18 | 19 | 20 | 21 |
|---|---|---|---|---|---|---|---|---|
| Glas Nr. | | 11 | 12 | 13 | 13 | 14 | 15 | 15 |
| Basisglas | | 1 | 1 | 1 | 1 | 1 | 1 | 1 |
| **Dotierungen (Gew.-%)** | | | | | | | | |
| $Fe_2O_3$ | | 0,062 | 0,080 | 0,062 | 0,062 | 0,061 | 0,062 | 0,062 |
| $V_2O_5$ | | | 0,010 | | | | | |
| $MoO_3$ | | 0,150 | 0,150 | 0,150 | 0,150 | 0,150 | 0,040 | 0,040 |
| $MnO_2$ | | 0,025 | 0,025 | 0,023 | 0,023 | 0,023 | 0,025 | 0,025 |
| $Cr_2O_3$ | | | 0,0036 | | | | | |
| $CeO_2$ | | | | | 0,060 | 0,060 | | |
| $WO_3$ | | | | | | 0,050 | | |
| Zusatz Gemenge | | | | | | | 0,2% Zucker ohne Nitrat | 0,2% Zucker ohne Nitrat |
| **Keramisierungs-programm** | # | 2 | 1 | 1 | 2 | 1 | 1 | 2 |
| **Eigenschaften keramisiert** | | | | | | | | |
| **Transmission 4 mm Dicke°** | | | | | | | | |
| 470 nm | % | 1,5 | 0,3 | 2,6 | 2,3 | 2,4 | 4,8 | 4,2 |
| 630 nm | % | 1,6 | 1,5 | 3,4 | 2,8 | 2,9 | 2,8 | 2,2 |
| 950 nm | % | 34,2 | 49,3 | 44,5 | 41,8 | 41,6 | 32,1 | 28,9 |
| 1600 nm | % | 70,9 | 70,9 | 73,7 | 73,1 | 73,3 | 75,7 | 74,7 |
| 3700 nm | % | 52,4 | 50,5 | 52,0 | 51,8 | 51,9 | 50,6 | 50,5 |
| **Farbkoordinaten (CIE) in Transmission 4mm Dicke, D65** | | | | | | | | |
| x | | 0,315 | 0,490 | 0,341 | 0,331 | 0,329 | 0,268 | 0,260 |
| y | | 0,299 | 0,367 | 0,324 | 0,316 | 0,311 | 0,276 | 0,266 |
| Helligkeit Y | % | 1,2 | 0,6 | 2,4 | 2,0 | 2,1 | 3,0 | 2,5 |
| Farbabstand d | | 0,030 | 0,181 | 0,028 | 0,023 | 0,024 | 0,069 | 0,082 |
| **Farbkoordinaten (CIELAB) in Transmission** | | | | | | | | |
| L* | | 10,3 | 5,4 | 17,4 | 15,3 | 15,9 | 20,2 | 18,1 |
| a* | | 3,9 | 9,3 | 5,0 | 4,5 | 4,9 | 1,2 | 1,2 |
| b* | | -2,6 | 5,9 | 0,9 | -0,5 | -1,1 | -9,3 | -10,4 |
| c* | | 4,7 | 11,0 | 5,1 | 4,5 | 5,1 | 9,4 | 10,5 |
| **Flachheit Transmission** (Wellenlänge bei Max./Min.) | nm | 1,5 630 /558 | 5,7 630 /470 | 1,6 630 /542 | 1,6 630 /549 | 1,6 630 /545 | 1,8 470 /594 | 2,0 470 /601 |
| **Streuung bei 4 mm Dicke** | | | | | | | | |
| Visuelle Bewertung | | 1 | 1 | 1 | 1 | 1 | 1 | 1 |
| Haze | % | 3,1 | 0,8 | 0,5 | 1,0 | 1,0 | 0,8 | 2,1 |
| **Thermische Ausdehnung ($10^{-6}$/K)** | | | | | | | | |
| $\alpha_{20/300}$ | | | -0,23 | -0,21 | -0,27 | -0,25 | -0,27 | -0,32 |
| $\alpha_{20/700}$ | | | 0,17 | 0,17 | 0,11 | 0,15 | 0,14 | 0,09 |
| **Röntgenbeugung** | | | | | | | | |
| Hauptkristallphase | | HQMK | HQMK | HQMK | HQMK | HQMK | HQMK | HQMK |

## Tabelle 2 (Fortsetzung): Dotierungen und Eigenschaften erfindungsgemäßer Glaskeramiken und Vergleichsglaskeramik 26.

| Beispiel Nr. | | 22 | 23 | 24 | 25 | 26 | 27 | 28 |
|---|---|---|---|---|---|---|---|---|
| Glas Nr. | | 16 | 16 | 17 | 18 | 19 | 20 | 21 |
| Basisglas | | 1 | 1 | 1 | 1 | 1 | 1 | 1 |
| **Dotierungen (Gew.-%)** | | | | | | | | |
| $Fe_2O_3$ | | 0,062 | 0,062 | 0,061 | 0,062 | 0,062 | 0,062 | 0,061 |
| $V_2O_5$ | | | | | | | | |
| $MoO_3$ | | 0,015 | 0,015 | 0,019 | 0,014 | 0,150 | 0,150 | 0,150 |
| $MnO_2$ | | 0,025 | 0,025 | 0,025 | 0,025 | 0,025 | 0,025 | 0,025 |
| CoO | | | | | | | | 0,020 |
| $Cr_2O_3$ | | | | | | 0,020 | | |
| $Nd_2O_3$ | | | | | 0,042 | | | |
| NiO | | | | | | | 0,027 | |
| Zusatz Gemenge | | | | 0,1% Zucker ohne Nitrat | | | | |
| **Keramisierungs-programm** | # | 1 | 2 | 1 | 1 | 1 | 1 | 1 |
| **Eigenschaften keramisiert** | | | | | | | | |
| **Transmission 4 mm Dicke°** | | | | | | | | |
| 470 nm | % | 42,6 | 43,4 | 22,2 | 42,8 | 0,3 | 1,6 | 2,0 |
| 630 nm | % | 53,4 | 52,7 | 21,2 | 54,2 | 2,6 | 2,1 | 2,0 |
| 950 nm | % | 76,4 | 75,9 | 57,4 | 76,5 | 43,5 | 36,6 | 39,7 |
| 1600 nm | % | 80,8 | 80,4 | 78,1 | 80,8 | 73,1 | 63,8 | 66,7 |
| 3700 nm | % | 53,6 | 53,4 | 50,5 | 53,2 | 51,9 | 50,8 | 50,4 |
| **Farbkoordinaten (CIE) in Transmission 4mm Dicke, D65** | | | | | | | | |
| x | | 0,335 | 0,332 | 0,311 | 0,334 | 0,475 | 0,341 | 0,315 |
| y | | 0,348 | 0,345 | 0,326 | 0,348 | 0,452 | 0,309 | 0,257 |
| Helligkeit Y | % | 47,6 | 47,4 | 20,4 | 47,8 | 1,5 | 1,3 | 1,2 |
| Farbabstand d | | 0,029 | 0,025 | 0,003 | 0,029 | 0,204 | 0,035 | 0,072 |
| **Farbkoordinaten (CIELAB) in Remission** | | | | | | | | |
| L* | | 28,13 | 28,42 | 25,84 | | | | |
| a* | | 0,32 | 0,30 | -0,05 | | | | |
| b* | | 0,15 | 0,31 | -1,27 | | | | |
| c* | | 0,35 | 0,43 | 1,27 | | | | |
| **Flachheit Transmission** (Wellenlänge bei Max./Min.) | nm | 1,3 630 /470 | 1,2 630 /470 | 1,1 470 /572 | 1,3 630 /470 | 7,8 630 /470 | 2,0 630 /538 | 2,4 630 /546 |
| **Streuung bei 4 mm Dicke** | | | | | | | | |
| Visuelle Bewertung | | 1 | 1 | 1 | 1 | 1 | 1 | 1 |
| Haze | % | 1,9 | 1,6 | 2,7 | | 0,6 | 0,6 | 0,7 |
| **Thermische Ausdehnung** | | | | | | | | |
| $\alpha_{20/300}$ | $10^{-6}$/K | -0,24 | -0,28 | -0,24 | -0,21 | | -0,23 | -0,23 |
| $\alpha_{20/700}$ | $10^{-6}$/K | 0,16 | 0,09 | 0,14 | 0,16 | | 0,17 | 0,15 |
| **Röntgenbeugung** | | | | | | | | |
| Hauptkristallphase | | HQMK | HQMK | HQMK | HQMK | HQMK | HQMK | HQMK |

## Tabelle 3: Zusammensetzungen und Eigenschaften kristallisierbarer Gläser und Vergleichsglas Nr. 22

| Glas Nr. | | 22 | 23 | 24 | 25 | 26 |
|---|---|---|---|---|---|---|
| **Zusammensetzung** | Gew.-% | | | | | |
| $Li_2O$ | | 3,83 | 3,82 | 3,83 | 3,79 | 3,71 |
| $Na_2O$ | | 0,57 | 0,60 | 0,61 | 0,60 | 0,46 |
| $K_2O$ | | 0,21 | 0,27 | 0,27 | 0,26 | 0,14 |
| $MgO$ | | 0,19 | 0,30 | 0,30 | 0,29 | 0,98 |
| $CaO$ | | 0,36 | 0,43 | 0,43 | 0,43 | |
| $SrO$ | | | 0,02 | 0,02 | 0,02 | |
| $BaO$ | | 2,41 | 2,22 | 2,21 | 2,23 | |
| $ZnO$ | | 1,41 | 1,52 | 1,49 | 1,47 | 1,58 |
| $Al_2O_3$ | | 20,2 | 20,9 | 20,9 | 21,0 | 20,9 |
| $SiO_2$ | | 65,8 | 64,8 | 64,8 | 65,0 | 67,5 |
| $TiO_2$ | | 3,02 | 4,10 | 3,14 | 3,05 | 2,47 |
| $ZrO_2$ | | 1,39 | 0,43 | 1,40 | 1,40 | 1,69 |
| $P_2O_5$ | | 0,11 | 0,10 | 0,10 | 0,10 | 0,09 |
| $SnO_2$ | | 0,30 | 0,25 | | | 0,23 |
| $As_2O_3$ | | | | 0,28 | 0,15 | |
| $Fe_2O_3$ | | 0,090 | 0,061 | 0,062 | 0,061 | 0,0600 |
| $V_2O_5$ | | 0,016 | | | | |
| $MoO_3$ | | | 0,150 | 0,150 | 0,150 | 0,1500 |
| $MnO_2$ | | 0,021 | 0,024 | 0,025 | 0,025 | 0,024 |
| $CoO$ | | 0,027 | | | | |
| Zusatz Gemenge | (Gew.-%) | | | | 0,2% Zucker ohne Nitrat | |
| **Eigenschaften glasig** | | | | | | |
| Transformationstemperatur Tg | °C | | 667 | 671 | 672 | 674 |
| $10^2$ - Temperatur | °C | | | | | 1729 |
| Verarbeitungstemperatur $V_A$ | °C | 1313 | 1294 | 1297 | 1301 | 1310 |
| OEG-Temperatur | °C | | | | | 1280 |

## Tabelle 3 (Fortsetzung): Zusammensetzungen und Eigenschaften kristallisierbarer Gläser

| Glas Nr. | | 27 | 28 | 29 | 30 |
|---|---|---|---|---|---|
| Zusammensetzung | Gew.-% | | | | |
| $Li_2O$ | | 4,03 | 3,82 | 3,31 | 3,30 |
| $Na_2O$ | | 0,42 | 0,60 | 0,37 | 0,36 |
| $K_2O$ | | 0,40 | 0,26 | 0,36 | 0,36 |
| MgO | | 0,77 | 0,30 | 0,56 | 0,56 |
| CaO | | | 0,43 | 0,58 | 0,58 |
| SrO | | | 0,02 | | 0,01 |
| BaO | | 0,39 | 2,23 | 1,62 | 1,63 |
| ZnO | | 0,56 | 1,48 | 1,92 | 1,90 |
| $Al_2O_3$ | | 20,1 | 21 | 21,4 | 21,4 |
| $SiO_2$ | | 68,0 | 64,5 | 64,8 | 64,7 |
| $TiO_2$ | | 4,69 | 3,08 | 3,20 | 4,02 |
| $ZrO_2$ | | | 1,40 | 1,35 | 0,68 |
| $P_2O_5$ | | 0,11 | 0,56 | 0,04 | 0,03 |
| $SnO_2$ | | 0,24 | 0,23 | 0,24 | 0,22 |
| $As_2O_3$ | | | | | |
| $Fe_2O_3$ | | 0,062 | 0,062 | 0,099 | 0,100 |
| $V_2O_5$ | | | | | |
| $MoO_3$ | | 0,140 | 0,040 | 0,160 | 0,149 |
| $MnO_2$ | | | 0,025 | | |
| $Nd_2O_3$ | | | | | |
| Zusatz Gemenge | (Gew.-%) | | 0,07% S | | |
| **Eigenschaften glasig** | | | | | |
| Transformationstemperatur Tg | °C | 670 | 668 | 675 | 670 |
| $10^2$ - Temperatur | °C | | | 1733 | |
| Verarbeitungstemperatur $V_A$ | °C | 1319 | 1299 | 1300 | 1295 |
| OEG-Temperatur | °C | | | 1275 | |

## Tabelle 3 (Fortsetzung): Zusammensetzungen und Eigenschaften kristallisierbarer Gläser

| Glas Nr. | | 31 | 32 | 33 | 34 | 35 |
|---|---|---|---|---|---|---|
| Zusammensetzung | Gew.-% | | | | | |
| $Li_2O$ | | 2,67 | 4,13 | 3,22 | 3,67 | 3,73 |
| $Na_2O$ | | 0,54 | 0,64 | 0,78 | 0,77 | 0,78 |
| $K_2O$ | | 0,24 | 0,29 | 0,20 | 0,21 | 0,58 |
| MgO | | 1,73 | 0,24 | 0,81 | 0,77 | 0,20 |
| CaO | | 0,69 | 0,52 | 0,21 | 0,21 | 0,21 |
| SrO | | | 0,02 | | | |
| BaO | | 1,97 | 2,05 | 2,42 | 0,68 | 2,41 |
| ZnO | | 1,65 | | 1,16 | 0,90 | 0,93 |
| $Al_2O_3$ | | 20,0 | 21,7 | 19,8 | 22,2 | 20,0 |
| $SiO_2$ | | 64,9 | 65,8 | 66,9 | 65,4 | 66,4 |
| $TiO_2$ | | 5,04 | 3,58 | 2,68 | 4,26 | 2,83 |
| $ZrO_2$ | | | 0,64 | 1,44 | 0,54 | 1,40 |
| $P_2O_5$ | | 0,07 | 0,03 | | | |
| $SnO_2$ | | 0,24 | 0,25 | 0,20 | 0,19 | 0,39 |
| $As_2O_3$ | | | | | | |
| $Fe_2O_3$ | | 0,091 | 0,065 | 0,110 | 0,085 | 0,033 |
| $V_2O_5$ | | | | | | |
| $MoO_3$ | | 0,099 | 0,026 | 0,043 | 0,079 | 0,045 |
| $MnO_2$ | | 0,018 | | | | |
| Zusatz Gemenge | (Gew.-%) | | | | 0,1% Zucker ohne Nitrat | 0,2% Zucker ohne Nitrat |
| **Eigenschaften glasig** | | | | | | |
| Transformationstemperatur Tg | °C | 671 | 685 | 680 | 675 | 674 |
| $10^2$ - Temperatur | °C | | 1774 | 1770 | 1693 | 1770 |
| Verarbeitungstemperatur $V_A$ | °C | 1296 | 1327 | 1331 | 1294 | 1331 |
| OEG-Temperatur | °C | 1265 | 1255 | 1260 | | |

Tabelle 4: Eigenschaften für die Sichtscheiben geeigneter Glaskeramiken und Vergleichsglaskeramik Beispiel 29

| Beispiel Nr. | | 29 | 30 | 31 | 32 | 33 | 34 |
|---|---|---|---|---|---|---|---|
| Glas Nr. | | 22 | 23 | 24 | 25 | 26 | 27 |
| Keramisierungs-programm | | 2 | 1 | 1 | 1 | 2 | 1 |
| **Eigenschaften keramisiert** | | | | | | | |
| **Transmission 4 mm Dicke** | | | | | | | |
| 470 nm | % | 1,9 | 0,9 | 43,4 | 39,4 | 2,5 | 0,8 |
| 630 nm | % | 10,8 | 0,6 | 57,1 | 52,3 | 7,8 | 1,7 |
| 950 nm | % | 72,0 | 25,6 | 82,2 | 83,1 | 55,4 | 37,6 |
| 1600 nm | % | 67,5 | 73,5 | 82,9 | 82,8 | 70,8 | 73,5 |
| 3700 nm | % | 49,4 | 51,5 | 53,6 | 52,0 | 49,9 | 52,4 |
| **Farbkoordinaten (CIE) in Transmission 4mm Dicke, D65** | | | | | | | |
| x | | 0,476 | 0,276 | 0,342 | 0,342 | 0,414 | 0,393 |
| y | | 0,322 | 0,265 | 0,355 | 0,351 | 0,359 | 0,350 |
| Helligkeit Y | % | 3,5 | 0,5 | 48,7 | 43,7 | 4,2 | 1,0 |
| Farbabstand d | | 0,163 | 0,089 | 0,024 | 0,037 | 0,106 | 0,083 |
| **Farbkoordinaten (CIELAB) in Remission** | | | | | | | |
| L* | | | | | 29,38 | | |
| a* | | | | | 0,46 | | |
| b* | | | | | 0,78 | | |
| c* | | | | | 0,91 | | |
| Flachheit Transmission (Wellenlänge bei Max./Min.) | nm | 8,0 630 /504 | 2,1 470 /571 | 1,3 630 /470 | 1,3 630 /470 | 3,1 630 /470 | 2,3 630 /509 |
| **Streuung bei 4 mm Dicke** | | | | | | | |
| Visuelle Bewertung | | 1 | 1 | 1 | 1 | 1 | 1 |
| Haze | % | 0,2 | 3,3 | 2,0 | 1,4 | 0,8 | 0,1 |
| **Thermische Ausdehnung ($10^{-6}$/K)** | | | | | | | |
| $\alpha_{20/300}$ | | -0,40 | -0,13 | -0,24 | -0,27 | -0,45 | -0,14 |
| $\alpha_{20/700}$ | | -0,03 | 0,23 | 0,16 | 0,12 | -0,15 | 0,14 |
| **Röntgenbeugung** | | | | | | | |
| Hauptkristall-phase | | HQMK | HQMK | HQMK | HQMK | HQMK | HQMK |

Tabelle 4 (Fortsetzung): Eigenschaften der Glaskeramiken

| Beispiel Nr. | | 35 | 36 | 37 | 38 |
|---|---|---|---|---|---|
| Glas Nr. | | 28 | 29 | 29 | 30 |
| Keramisierungs-programm | | 1 | 1 | 2 | 1 |
| **Eigenschaften keramisiert** | | | | | |
| **Transmission 4 mm Dicke** | | | | | |
| 470 nm | % | 1,8 | 5,8 | 5,2 | 0,6 |
| 630 nm | % | 0,6 | 8,3 | 7,0 | 1,0 |
| 950 nm | % | 18,6 | 53,4 | 50,9 | 28,2 |
| 1600 nm | % | 73,2 | 69,1 | 68,1 | 66,1 |
| 3700 nm | % | 49,2 | 46,3 | 46,4 | 47,8 |
| **Farbkoordinaten (CIE) in Transmission 4mm Dicke, D65** | | | | | |
| x | | 0,234 | 0,344 | 0,338 | 0,357 |
| y | | 0,238 | 0,325 | 0,320 | 0,331 |
| Helligkeit Y | % | 0,9 | 5,9 | 5,0 | 0,6 |
| Farbabstand d | | 0,120 | 0,032 | 0,027 | 0,044 |
| **Farbkoordinaten (CIELAB) in Transmission** | | | | | |
| L* | | 7,9 | 29,1 | 26,8 | 5,6 |
| a* | | 1,2 | 7,1 | 6,5 | 3,2 |
| b* | | -11,0 | 1,7 | 0,4 | 1,3 |
| c* | | 11,1 | 7,3 | 6,5 | 3,5 |
| Flachheit Transmission (Wellenlänge bei Max./Min.) | nm | 2,9 470 /609 | 1,6 630 /527 | 1,6 630/536 | 1,8 630/533 |
| **Streuung bei 4 mm Dicke** | | | | | |
| Visuelle Bewertung | | 1 | 1 | 1 | 1 |
| Haze | % | 0,2 | 0,6 | 3,4 | 0,3 |
| **Thermische Ausdehnung ($10^{-6}$/K)** | | | | | |
| $\alpha_{20/300}$ | | -0,28 | 0,05 | 0,00 | 0,30 |
| $\alpha_{20/700}$ | | 0,12 | 0,34 | 0,27 | 0,55 |
| **Röntgenbeugung** | | | | | |
| Hauptkristallphase | | HQMK | HQMK | HQMK | HQMK |

## Tabelle 4 (Fortsetzung): Eigenschaften der Glaskeramiken

| Beispiel Nr. | | 39 | 40 | 41 | 42 | 43 |
|---|---|---|---|---|---|---|
| Glas Nr. | | 31 | 32 | 33 | 34 | 35 |
| Keramisierungs-programm | | 2 | 1 | 2 | 2 | 2 |
| **Eigenschaften keramisiert** | | | | | | |
| **Transmission 4 mm Dicke°** | | | | | | |
| 470 nm | % | 0,7 | 12,1 | 33,2 | 1,9 | 12,5 |
| 630 nm | % | 1,4 | 27,4 | 46,1 | 2,8 | 10,8 |
| 950 nm | % | 34,6 | 54,0 | 71,6 | 33,1 | 51,8 |
| 1600 nm | % | 71,3 | 72,1 | 72,3 | 69,9 | 82,7 |
| 3700 nm | % | 44,3 | 49,9 | 46,1 | 47,7 | 47,0 |
| **Farbkoordinaten (CIE) in Transmission 4mm Dicke, D65** | | | | | | |
| x | | 0,389 | 0,389 | 0,342 | 0,350 | 0,302 |
| y | | 0,366 | 0,385 | 0,348 | 0,347 | 0,313 |
| Helligkeit Y | % | 0,9 | 19,6 | 38,5 | 2,1 | 10,3 |
| Farbabstand d | | 0,085 | 0,095 | 0,035 | 0,041 | 0,019 |
| **Farbkoordinaten (CIELAB) in Transmission** | | | | | | |
| L* | | 8,1 | 51,4 | 68,4 | 16,0 | 38,4 |
| a* | | 4,0 | 5,9 | 4,3 | 2,8 | 1,3 |
| b* | | 5,3 | 21,7 | 9,4 | 3,9 | -3,9 |
| c* | | 6,7 | 22,5 | 10,3 | 4,8 | 4,1 |
| **Flachheit Transmission (Wellenlänge bei Max./Min.)** | nm | 2,1 630/ 470 | 2,3 630/ 470 | 1,4 630/470 | 1,5 630/470 | 1,3 470/575 |
| **Streuung bei 4 mm Dicke** | | | | | | |
| Visuelle Bewertung | | 1 | 2 | 1 | 1 | 1 |
| Haze | % | 2,5 | | 1,1 | 2,9 | 1,1 |
| **Thermische Ausdehnung ($10^{-6}$/K)** | | | | | | |
| $\alpha_{20/300}$ | | 1,23 | -0,37 | 0,32 | 0,23 | -0,14 |
| $\alpha_{20/700}$ | | 1,49 | 0,01 | 0,59 | 0,51 | 0,26 |
| **Röntgenbeugung** | | | | | | |
| Hauptkristallphase | | HQMK | HQMK | HQMK | HQMK | HQMK |

**Patentansprüche**

1. Sichtscheibe für einen Kamin, umfassend ein Substrat aus transparenter, eingefärbter Lithiumaluminiumsilikat-Glaskeramik,

   wobei die Glaskeramik einen Lichttransmissionsgrad von 0,1 % bis 50 % aufweist und
   wobei Licht der Normlichtart D65 nach Durchtritt durch die Glaskeramik bei einer Dicke von 4 mm einen Farbort im Weißbereich W1 aufweist, der im Chromatizitätsdiagramm CIExyY-2° durch folgende Koordinaten bestimmt ist:

| Weißbereich W1 | |
|---|---|
| x | y |
| 0,27 | 0,21 |
| 0,22 | 0,25 |

(fortgesetzt)

| Weißbereich W1 | |
|---|---|
| x | y |
| 0,32 | 0,37 |
| 0,45 | 0,45 |
| 0,47 | 0,34 |
| 0,36 | 0,29 |

wobei das Substrat 0,003 - 0,5 Gew.-% $MoO_3$ als färbende Komponente und/oder weniger als 0,2 Gew.-% $Nd_2O_3$ enthält.

2. Sichtscheibe nach Anspruch 1,
**dadurch gekennzeichnet, dass** das Substrat weniger als 0,02 Gew.-%, vorzugsweise weniger als 0,015 Gew.-%, besonders bevorzugt weniger als 0,01 Gew.-% $V_2O_5$ enthält.

3. Sichtscheibe nach einem der vorhergehenden Ansprüche, **dadurch gekennzeichnet, dass** der $SnO_2$ -Gehalt 0,05 - 0,8 Gew.-% beträgt.

4. Sichtscheibe nach Anspruch 1, **dadurch gekennzeichnet, dass** das Substrat eine Infrarot-Transmission von 45 - 85 % bei einer Wellenlänge von 1600 nm und einer Dicke von 4 mm aufweist.

5. Sichtscheibe nach Anspruch 1, **dadurch gekennzeichnet, dass** die Glaskeramik die Komponenten (in Gew.-% auf Oxidbasis) enthält:

| | |
|---|---|
| $Li_2O$ | 2 - 5,5 |
| $Al_2O_3$ | 16 - 26 |
| $SiO_2$ | 58 - 72 |
| $MoO_3$ | 0,003 - 0,5 |

6. Sichtscheibe nach Anspruch 1, **dadurch gekennzeichnet, dass** die Glaskeramik Hochquarz-Mischkristalle als Hauptkristallphase enthält.

7. Verwendung einer Sichtscheibe nach Anspruch 1 als Kaminsichtscheibe, wobei die Dicke der Scheibe vorzugsweise zwischen 2 und 8 mm liegt.

8. Verwendung einer Sichtscheibe nach Anspruch 1 als Backofensichtscheibe, wobei die Dicke der Scheibe vorzugsweise zwischen 2 und 8 mm liegt.

9. Verwendung einer Sichtscheibe nach Anspruch 1 als Sichtscheibe in einem Grillgerät, wobei die Dicke der Scheibe vorzugsweise zwischen 2 und 8 mm liegt.

**Claims**

1. Sightglass for a stove, comprising a substrate made of transparent coloured lithium aluminium silicate glass ceramic,

wherein the glass ceramic has a light transmittance of 0.1% to 50% and
wherein standard illuminant D65 light, after passing through the glass ceramic, at a thickness of 4 mm, has a colour locus in the white region W1 determined by the following coordinates in the chromaticity diagram CIExyY-2°:

| White region W1 | |
|---|---|
| x | y |
| 0.27 | 0.21 |
| 0.22 | 0.25 |
| 0.32 | 0.37 |
| 0.45 | 0.45 |
| 0.47 | 0.34 |
| 0.36 | 0.29 |

wherein the substrate contains 0.003-0.5% by weight of $MoO_3$ as colouring component and/or less than 0.2% by weight of $Nd_2O_3$.

2. Sightglass according to Claim 1,
**characterized in that** the substrate contains less than 0.02% by weight, preferably less than 0.015% by weight, more preferably less than 0.01% by weight, of $V_2O_5$.

3. Sightglass according to either of the preceding claims, **characterized in that** the $SnO_2$ content is 0.05-0.8% by weight.

4. Sightglass according to Claim 1,
**characterized in that** the substrate has an infrared transmittance of 45-85% at a wavelength of 1600 nm and at a thickness of 4 mm.

5. Sightglass according to Claim 1, **characterized in that** the glass ceramic contains the following components (in % by weight based on oxide):

| | |
|---|---|
| $Li_2O$ | 2 - 5.5 |
| $Al_2O_3$ | 16 - 26 |
| $SiO_2$ | 58 - 72 |
| $MoO_3$ | 0.003 - 0.5 |

6. Sightglass according to Claim 1, **characterized in that** the glass ceramic contains high quartz solid solutions as main crystal phase.

7. Use of a sightglass according to Claim 1 as stove sightglass, wherein the thickness of the glass is preferably between 2 and 8 mm.

8. Use of a sightglass according to Claim 1 as baking oven sightglass, wherein the thickness of the glass is preferably between 2 and 8 mm.

9. Use of a sightglass according to Claim 1 as sightglass in a barbecue, wherein the thickness of the glass is preferably between 2 and 8 mm.

**Revendications**

1. Vitre pour une cheminée, comprenant un substrat en vitrocéramique de silicate de lithium-aluminium teintée transparente,

la vitrocéramique présentant un degré de transmission de la lumière de 0,1 % à 50 %, et
de la lumière de l'illuminant standard D65 présentant après passage à travers la vitrocéramique à une épaisseur de 4 mm un point de couleur dans la zone blanche W1, qui est déterminé dans le diagramme de chromaticité CIExyY-2° par les coordonnées suivantes :

| Zone blanche W1 | |
|---|---|
| X | Y |
| 0,27 | 0,21 |
| 0,22 | 0,25 |
| 0,32 | 0,37 |
| 0,45 | 0,45 |
| 0,47 | 0,34 |
| 0,36 | 0,29 |

le substrat contenant 0,003 à 0,5 % en poids de $M0O_3$ en tant que composant colorant et/ou moins de 0,2 % en poids de $Nd_2O_3$.

2. Vitre selon la revendication 1, **caractérisée en ce que** le substrat contient moins de 0,02 % en poids, de préférence moins de 0,015 % en poids, de manière particulièrement préférée moins de 0,01 % en poids de $V_2O_5$.

3. Vitre selon l'une quelconque des revendications précédentes, **caractérisée en ce que** la teneur en $SnO_2$ est de 0,05 à 0,8 % en poids.

4. Vitre selon la revendication 1, **caractérisée en ce que** le substrat présente une transmission infrarouge de 45 à 85 % à une longueur d'onde de 1 600 nm et une épaisseur de 4 mm.

5. Vitre selon la revendication 1, **caractérisée en ce que** la vitrocéramique contient les composants (en % en poids sur la base d'oxyde) :

$Li_2O$          2 à 5,5
$Al_2O_3$        16 à 26
$SiO_2$          58 à 72
$MoO_3$       0,003 à 0,5.

6. Vitre selon la revendication 1, **caractérisée en ce que** la vitrocéramique contient des cristaux mixtes de quartz bêta en tant que phase cristalline principale.

7. Utilisation d'une vitre selon la revendication 1 en tant que vitre de cheminée, l'épaisseur de la vitre se situant de préférence entre 2 et 8 mm.

8. Utilisation d'une vitre selon la revendication 1 en tant que vitre de four, l'épaisseur de la vitre se situant de préférence entre 2 et 8 mm.

9. Utilisation d'une vitre selon la revendication 1 en tant que vitre dans un appareil de grillage, l'épaisseur de la vitre se situant de préférence entre 2 et 8 mm.

Fig. 1 (a)

Fig. 1 (b)

Fig. 2

Fig. 3 (a)

Fig. 3 (b)

Fig. 4

Fig. 5 (a)

Fig. 5 (b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014226986 A1
- FR 3002532 A1
- DE 102017101114 A1
- DE 202018100558 U1
- DE 2705948 A1
- DE 102007036407 A1

- US 20150274579 A1
- US 4285728 A
- EP 1074520 A1
- WO 2010102859 A1
- WO 2012076414 A1